(19) Europäisches Patentamt
European Patent Office
Office européen des brevets

(11) EP 3 292 762 A1

(12) **EUROPEAN PATENT APPLICATION**

(43) Date of publication:
**14.03.2018 Bulletin 2018/11**

(51) Int Cl.:
***A01N 43/50*** *(2006.01)*

(21) Application number: **17188974.4**

(22) Date of filing: **01.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.09.2016 EP 16188482**

(71) Applicants:
- **Bayer CropScience Aktiengesellschaft**
  **40789 Monheim am Rhein (DE)**
- **Bayer AG**
  **51373 Leverkusen (DE)**

(72) Inventors:
- **COQUERON, Pierre-Yves**
  **69009 Lyon (FR)**
- **BERNIER, David**
  **69004 Lyon (FR)**
- **WACHENDORFF-NEUMANN, Ulrike**
  **56566 Neuwied (DE)**
- **GÖRTZ, Andreas**
  **41541 Dormagen (DE)**
- **DAHMEN, Peter**
  **41470 Neuss (DE)**
- **DUCROT, Virginie Pascal**
  **51399 Burscheid (DE)**

(74) Representative: **BIP Patents**
**c/o Bayer Intellectual Property GmbH**
**Alfred-Nobel-Straße 10**
**40789 Monheim am Rhein (DE)**

(54) **ACTIVE COMPOUND COMBINATIONS COMPRISING A 5-SUBSTITUTED IMIDAZOLE DERIVATIVE**

(57) The present invention relates to active compound combinations comprising particular 5-substituted imidazolylmethyl derivatives as well as at least one further fungicide selected from inhibitors of the ergosterol synthesis, to compositions comprising such compound combination, and to the use thereof as biologically active agents, especially for control of harmful microorganisms in crop protection and in the protection of materials and as plant growth regulators.

EP 3 292 762 A1

## Description

The present invention relates to active compound combinations comprising certain 5-substituted imidazolylmethyl derivatives of formula (I-1-Q-I-1) as well as at least one particular further fungicide, to compositions comprising such active compound combination, and to the use thereof as biologically active agents, especially for control of harmful microorganisms in crop protection and in the protection of materials and as plant growth regulators.

It is already known that particular 2-iodo-substituted imidazole derivatives can be used in crop protection as fungicides (cf. WO-A 2013/076228). Moreover, US-A 4,085,209 discloses the preparation and safening effect of certain imidazole metal salt complexes, wherein the imidazole ring may be unsubstituted or substituted by up to 3 methyl groups or halogen atoms. WO-A 2014/076228 and WO-A 2014/118170 disclose microbiocides and their use in compositions and methods for the control and/or prevention of microbial infection, particularly fungal infection, in plants. The microbiocides may be based on a tetrazole, triazole, oxazole, thiazole, or imidazole structure. Novel 5-substituted imidazolylmethyl derivatives of formula (I-1-Q-I-1) have been developed and are subject of WO-A 2016/156290.

Since the environmental and economic requirements imposed on modern-day crop protection agents and compositions are continually increasing, with regard, for example, to their compatibility to non-target species, a constant task is to develop new compositions, in particular fungicidal agents, with improved non-target species compatibility. The present invention provides active compound combinations/compositions which in some aspects at least achieve the stated objective.

Accordingly, the present invention provides active compound combinations comprising
at least one imidazole derivative of formula (I-1-Q-I-1)

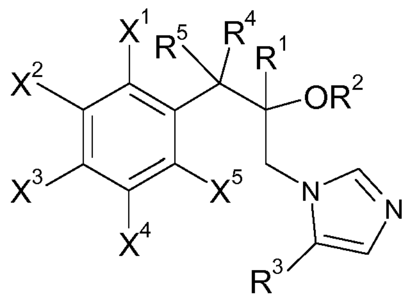

(I-1-Q-I-1),

wherein

$R^1$ represents 1-chlorocyclopropyl, 1-fluorocyclopropyl, 1-methylcyclopropyl or cyclopropylmethyl;

$R^2$ represents H;

$R^3$ represents chlorine or cyano;

$R^4$ represents hydrogen, fluorine, methyl;

$R^5$ represents hydrogen, fluorine, methyl;

$X^1$, $X^2$, $X^3$, $X^4$ or $X^5$ independently from each other represent hydrogen, methyl, $CF_3$ or halogen;

and its salts or N-oxides,
and
at least one further active compound selected from the group of inhibitors of the ergosterol synthesis.

The active compound combinations according to the invention comprise (A) at least one imidazole derivative of formula (I-1-Q-I-1) or a salt or N-oxide thereof. The salts or N-oxides of the imidazole derivatives of formula (I-1-Q-I-1) also have fungicidal properties.

The formula (I-1-Q-I-1) provides a general definition of the imidazole derivatives present in the compound combinations according to the invention. Preferred radical definitions for the formulae shown above and below are given below. These definitions apply to the end products and likewise to all intermediates.

$R^1$ preferably represents 1-chlorocyclopropyl.

$R^3$ preferably represents cyano.

$R^4$ preferably represents hydrogen;

$R^5$ preferably represents hydrogen;

$X^1$, $X^2$, $X^3$, $X^4$ or $X^5$ independently from each other preferably represent hydrogen or halogen, more preferably hydrogen, fluorine or chlorine.

More preferably at least 3 of $X^1$, $X^2$, $X^3$, $X^4$ and $X^5$ represent hydrogen and the remaining of $X^1$, $X^2$, $X^3$, $X^4$ and $X^5$ represent fluorine or chlorine.

Preferred compound combinations comprise (A) a compound of formula (I-1-Q-I-1) selected from the group consisting of compound (I-34) 1-[2-(1-chlorocyclopropyl)-3-(2-fluorophenyl)-2-hydroxypropyl]-1*H*-imidazole-5-carbonitrile, its stereoisomers (I-132) 1-[(2R)-2-(1-chlorocyclopropyl)-3-(2-fluorophenyl)-2-hydroxypropyl]-1H-imidazole-5-carbonitrile and (I-133) 1-[(2S)-2-(1-chlorocyclopropyl)-3-(2-fluorophenyl)-2-hydroxypropyl]-1H-imidazole-5-carbonitrile, and compound (I-145) 1-[3-(3-chloro-2-fluorophenyl)-2-(1-chlorocyclopropyl)-2-hydroxypropyl]-1H-imidazole-5-carbonitrile.

In the definitions of the symbols given in the above formulae, collective terms were used which are generally representative of the following substituents:

The definition $C_1$-$C_8$-alkyl comprises the largest range defined here for an alkyl radical. Specifically, this definition comprises the meanings methyl, ethyl, n-, isopropyl, n-, iso-, sec-, tert-butyl, and also in each case all isomeric pentyls, hexyls, heptyls and octyls, such as methyl, ethyl, propyl, 1-methylethyl, butyl, 1-methylpropyl, 2-methylpropyl, 1,1-dimethylethyl, n-pentyl, 1-methylbutyl, 2-methylbutyl, 3-methylbutyl, 1,2-dimethylpropyl, 1,1-dimethylpropyl, 2,2-dimethylpropyl, 1-ethylpropyl, n-hexyl, 1-methylpentyl, 2-methylpentyl, 3-methylpentyl, 4-methylpentyl, 1,2-dimethylbutyl, 1,3-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, 1-ethyl-3-methylpropyl, n-heptyl, 1-methylhexyl, 1-ethylpentyl, 2-ethylpentyl, 1-propylbutyl, octyl, 1-methylheptyl, 2-methylheptyl, 1-ethylhexyl, 2-ethylhexyl, 1-propylpentyl and 2-propylpentyl, in particular propyl, 1-methylethyl, butyl, 1-methylbutyl, 2-methylbutyl, 3-methylbutyl, 1,1-dimethylethyl, 1,2-dimethylbutyl, 1,3-dimethylbutyl, pentyl, 1-methylbutyl, 1-ethylpropyl, hexyl, 3-methylpentyl, heptyl, 1-methylhexyl, 1-ethyl-3-methylbutyl, 1-methylheptyl, 1,2-dimethylhexyl, 1,3-dimethyloctyl, 4-methyloctyl, 1,2,2,3-tetramethylbutyl, 1,3,3-trimethylbutyl, 1,2,3-trimethylbutyl, 1,3-dimethylpentyl, 1,3-dimethylhexyl, 5-methyl-3-hexyl, 2-methyl-4-heptyl and 1-methyl-2-cyclopropylethyl. A preferred range is $C_1$-$C_4$-alkyl, such as methyl, ethyl, n-, isopropyl, n-, iso-, sec-, tert-butyl. The definition $C_1$-$C_3$-alkyl comprises methyl, ethyl, n-, isopropyl.

The definition halogen comprises fluorine, chlorine, bromine and iodine. Halogen-substitution is generally indicated by the prefix halo, halogen or halogeno.

Halogen-substituted alkyl - e.g. referred to as $C_1$-$C_8$-haloalkyl - represents, for example, $C_1$-$C_8$-alkyl as defined above substituted by one or more halogen substituents which can be the same or different. Preferably $C_1$-$C_8$-haloalkyl represents chloromethyl, dichloromethyl, trichloromethyl, fluoromethyl, difluoromethyl, trifluoromethyl, chlorofluoromethyl, dichlorofluoromethyl, chlorodifluoromethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl, 1-fluoro-1-methylethyl, 2-fluoro-1,1-dimethylethyl, 2-fluoro-1-fluoromethyl-1-methylethyl, 2-fluoro-1,1-di(fluoromethyl)-ethyl, 3-chloro-1-methylbutyl, 2-chloro-1-methylbutyl, 1-chlorobutyl, 3,3-dichloro-1-methylbutyl, 3-chloro-1-methylbutyl, 1-methyl-3-trifluoromethylbutyl, 3-methyl-1-trifluoromethylbutyl.

Mono- or multiple fluorinated $C_1$-$C_4$-alkyl represents, for example, $C_1$-$C_4$-alkyl as defined above substituted by one or more fluorine substituent(s). Preferably mono- or multiple fluorinated $C_1$-$C_4$-alkyl represents fluoromethyl, difluoromethyl, trifluoromethyl, 1-fluoroethyl, 2-fluoroethyl, 2,2-difluoroethyl, 2,2,2-trifluoroethyl, pentafluoroethyl, 1-fluoro-1-methylethyl, 2-fluoro-1,1-dimethylethyl, 2-fluoro-1-fluoromethyl-1-methyl ethyl, 2-fluoro-1,1-di(fluoromethyl)-ethyl, 1-methyl-3-trifluoromethylbutyl, 3-methyl-1-trifluoromethylbutyl.

The definition $C_2$-$C_8$-alkenyl comprises the largest range defined here for an alkenyl radical. Specifically, this definition comprises the meanings ethenyl, n-, isopropenyl, n-, iso-, sec-, tert-butenyl, and also in each case all isomeric pentenyls, hexenyls, heptenyls, octenyls, 1-methyl-1-propenyl, 1-ethyl-1-butenyl, 2,4-dimethyl-1-pentenyl, 2,4-dimethyl-2-pentenyl. Halogen-substituted alkenyl - referred to as $C_2$-$C_8$-haloalkenyl - represents, for example, $C_2$-$C_8$-alkenyl as defined above substituted by one or more halogen substituents which can be the same or different. A preferred range is $C_2$-$C_4$-alkenyl, such as ethenyl, n-, isopropenyl, n-, iso-, sec- or tert-butenyl.

The definition $C_2$-$C_8$-alkynyl comprises the largest range defined here for an alkynyl radical. Specifically, this definition comprises the meanings ethynyl, n-, isopropynyl, n-, iso-, sec-, tert-butynyl, and also in each case all isomeric

pentynyls, hexynyls, heptynyls, octynyls. Halogen-substituted alkynyl - referred to as $C_2$-$C_8$-haloalkynyl - represents, for example, $C_2$-$C_8$-alkynyl as defined above substituted by one or more halogen substituents which can be the same or different. A preferred range is $C_2$-$C_4$-alkynyl, such as ethynyl, n-, isopropynyl, n-, iso-, sec- or tert-butynyl.

The definition $C_3$-$C_7$-cycloalkyl comprises monocyclic saturated hydrocarbyl groups having 3 to 7 carbon ring members, such as cyclopropyl, cyclobutyl, cyclopentyl, cyclohexyl and cycloheptyl.

The definition halogen-substituted cycloalkyl and halocycloalkyl comprises monocyclic saturated hydrocarbyl groups having 3 to 7 carbon ring members, such as 1-fluoro-cyclopropyl and 1-chloro-cyclopropyl.

The definition bicycloalkyl comprises spirocyclic alkyl wherein two substituents at the same carbon atom of a $C_3$-$C_7$-cycloalkyl can form together with the carbon atom to which they are attached a $C_3$-$C_7$-cycloalkyl, this definition comprises for example the meaning spiro[2.2]pentyl. The definition bicycloalkyl also comprises bicyclic alkyls wherein two substituents at different adjacent or non-adjacent carbon atoms of a $C_3$-$C_7$-cycloalkyl can form together with the carbon atoms to which they are attached a $C_3$-$C_7$-cycloalkyl, this definition comprises for example the meaning bicyclo[2.2.1]heptane-2-yl, bicyclo[2.2.1]heptane-7-yl, bicyclo[4.1.0]heptane-2-yl, bicyclo[4.1.0]heptane-3-yl, bicyclo[4.1.0]heptane-7-yl The definition bicycloalkyl also comprises bicyclic alkyls wherein two substituents at different adjacent or non-adjacent carbon atoms of a $C_3$-$C_7$-cycloalkyl can form an alkylene bridge between the carbon atoms to which they are attached, this definition comprises for example the meaning bicyclo[2.2.1]hept-2-ene-2-yl, bicyclo[2.2.1]hept-2-ene-5-yl, bicyclo[2.2.1]hept-2-ene-7-yl.

The definition aryl comprises aromatic, mono-, bi- or tricyclic ring, for example phenyl, naphthyl, anthracenyl (anthryl), phenanthracenyl (phenanthryl).

The definition hetaryl or heteroaryl comprises unsaturated, benzoannulated or not benzoannulated heterocyclic 5- to 10-membered ring containing up to 4 heteroatoms selected from N, O and S. Preferably The definition hetaryl or heteroaryl comprises unsubstituted or substituted, unsaturated heterocyclic 5- to 7-membered ring containing up to 4 heteroatoms selected from N, O and S: for example 2-furyl, 3-furyl, 2-thienyl, 3-thienyl, 2-pyrrolyl, 3-pyrrolyl, 1-pyrrolyl, 3-pyrazolyl, 4-pyrazolyl, 5-pyrazolyl, 1-pyrazolyl, 1H-imidazol-2-yl, 1H-imidazol-4-yl, 1H-imidazol-5-yl, 1H-imidazol-1-yl, 2-oxazolyl, 4-oxazolyl, 5-oxazolyl, 2-thiazolyl, 4-thiazolyl, 5-thiazolyl, 3-isoxazolyl, 4-isoxazolyl, 5-isoxazolyl, 3-isothiazolyl, 4-isothiazolyl, 5-isothiazolyl, 1H-1,2,3-triazol-1-yl, 1H-1,2,3-triazol-4-yl, 1H-1,2,3-triazol-5-yl, 2H-1,2,3-triazol-2-yl, 2H-1,2,3-triazol-4-yl, 1H-1,2,4-triazol-3-yl, 1H-1,2,4-triazol-5-yl, 1H-1,2,4-triazol-1-yl, 4H-1,2,4-triazol-3-yl, 4H-1,2,4-triazol-4-yl, 1H-tetrazol-1-yl, 1H-tetrazol-5-yl, 2H-tetrazol-2-yl, 2H-tetrazol-5-yl, 1,2,4-oxadiazol-3-yl, 1,2,4-oxadiazol-5-yl, 1,2,4-thiadiazol-3-yl, 1,2,4-thiadiazol-5-yl, 1,3,4-oxadiazol-2-yl, 1,3,4-thiadiazol-2-yl, 1,2,3-oxadiazol-4-yl, 1,2,3-oxadiazol-5-yl, 1,2,3-thiadiazol-4-yl, 1,2,3-thiadiazol-5-yl, 1,2,5-oxadiazol-3-yl, 1,2,5-thiadiazol-3-yl, 2-pyridinyl, 3-pyridinyl, 4-pyridinyl, 3-pyridazinyl, 4-pyridazinyl, 2-pyrimidinyl, 4-pyrimidinyl, 5-pyrimidinyl, 2-pyrazinyl, 1,3,5-triazin-2-yl, 1,2,4-triazin-3-yl, 1,2,4-triazin-5-yl, 1,2,4-triazin-6-yl.

The definition 5-membered heteroaryl comprises an unsaturated heterocyclic 5-membered ring containing up to 4 heteroatoms selected from N, O and S: for example 2-furyl, 3-furyl, 2-thienyl, 3-thienyl, 2-pyrrolyl, 3-pyrrolyl, 1-pyrrolyl, 3-pyrazolyl, 4-pyrazolyl, 5-pyrazolyl, 1-pyrazolyl, 1H-imidazol-2-yl, 1H-imidazol-4-yl, 1H-imidazol-5-yl, 1H-imidazol-1-yl, 2-oxazolyl, 4-oxazolyl, 5-oxazolyl, 2-thiazolyl, 4-thiazolyl, 5-thiazolyl, 3-isoxazolyl, 4-isoxazolyl, 5-isoxazolyl, 3-isothiazolyl, 4-isothiazolyl, 5-isothiazolyl, 1H-1,2,3-triazol-1-yl, 1H-1,2,3-triazol-4-yl, 1H-1,2,3-triazol-5-yl, 2H-1,2,3-triazol-2-yl, 2H-1,2,3-triazol-4-yl, 1H-1,2,4-triazol-3-yl, 1H-1,2,4-triazol-5-yl, 1H-1,2,4-triazol-1-yl, 4H-1,2,4-triazol-3-yl, 4H-1,2,4-triazol-4-yl, 1H-tetrazol-1-yl, 1H-tetrazol-5-yl, 2H-tetrazol-2-yl, 2H-tetrazol-5-yl, 1,2,4-oxadiazol-3-yl, 1,2,4-oxadiazol-5-yl, 1,2,4-thiadiazol-3-yl, 1,2,4-thiadiazol-5-yl, 1,3,4-oxadiazol-2-yl, 1,3,4-thiadiazol-2-yl, 1,2,3-oxadiazol-4-yl, 1,2,3-oxadiazol-5-yl, 1,2,3-thiadiazol-4-yl, 1,2,3-thiadiazol-5-yl, 1,2,5-oxadiazol-3-yl, 1,2,5-thiadiazol-3-yl.

The definition 6-membered heteroaryl comprises an unsaturated heterocyclic 6-membered ring containing up to 4 heteroatoms selected from N, O and S: for example 2-pyridinyl, 3-pyridinyl, 4-pyridinyl, 3-pyridazinyl, 4-pyridazinyl, 2-pyrimidinyl, 4-pyrimidinyl, 5-pyrimidinyl, 2-pyrazinyl, 1,3,5-triazin-2-yl, 1,2,4-triazin-3-yl, 1,2,4-triazin-5-yl, 1,2,4-triazin-6-yl.

The definition heterocycloalkyl comprises saturated or partially unsaturated mono-, bi- or tricyclic ring systems consisting of C-atoms and containing up to 4 heteroatoms selected from N, O and S: for example aziridinyl, pyrrolidinyl, dihydropyridyl, piperidinyl, piperazinyl, morpholinyl, thiomorpholinyl, tetrahydrofuranyl, tetrahydrothiofuranyl, tetrahydropyranyl, pyranyl, isoxazolidinyl, isoxazolinyl, pyrazolinyl, dihydropyrrolyl, tetrahydropyridinyl, dioxolanyl, dioxanyl, oxathiolanyl, oxathianyl, dithiolanyl, dithianyl. The term partially unsaturated refers to ring systems that are neither saturated, i.e. comprising no double bound, nor fully unsaturated, i.e. comprising the maximum possible number of double bonds. In other words, partially unsaturated ring systems comprise at least one double bond, but not the maximum possible number of double bonds.

Optionally substituted radicals may be mono- or polysubstituted, where in the case of polysubstitution, the substituents may be identical or different.

Unless indicated otherwise, a group or a substituent which is substituted according to the invention preferably can be substituted by one or more group(s) selected from the list consisting of halogen, SH, nitro, hydroxyl, cyano, amino, sulfanyl, pentafluoro-$\lambda^6$-sulfanyl, formyl, formyloxy, formylamino, carbamoyl, N-hydroxycarbamoyl, carbamate,

(hydroxyimino)-$C_1$-$C_6$-alkyl, $C_1$-$C_8$-alkyl, $C_1$-$C_8$-halogenalkyl, $C_1$-$C_8$-alkyloxy, $C_1$-$C_8$-halogenalkyloxy, $C_1$-$C_8$-alkylthio, $C_1$-$C_8$-halogenalkylthio, tri($C_1$-$C_8$-alkyl)silyl, tri($C_1$-$C_8$-alkyl)silyl-$C_1$-$C_8$-alkyl, $C_3$-$C_7$-cycloalkyl, $C_3$-$C_7$-halocycloalkyl, $C_3$-$C_7$-cycloalkenyl, $C_3$-$C_7$-halocycloalkenyl, $C_4$-$C_{10}$-cycloalkylalkyl, $C_4$-$C_{10}$-halocycloalkylalkyl, $C_6$-$C_{12}$-cycloalkylcycloalkyl, tri($C_1$-$C_8$-alkyl)silyl-$C_3$-$C_7$-cycloalkyl, $C_1$-$C_8$-halogenoalkyl, $C_3$-$C_7$-halogenocycloalkyl, $C_2$-$C_8$-alkenyl, $C_2$-$C_8$-alkynyl, $C_2$-$C_8$-alkenyloxy, $C_2$-$C_8$-halogenalkenyloxy, $C_2$-$C_8$-alkynyloxy, $C_1$-$C_8$-alkylamino, di-$C_1$-$C_8$-alkylamino, $C_1$-$C_8$-halogenalkylamino, di-$C_1$-$C_8$-halogenalkylamino, $C_1$-$C_8$-alkylaminoalkyl, di-$C_1$-$C_8$-alkylaminoalkyl, $C_1$-$C_8$-alkoxy, $C_1$-$C_8$-halogenoalkoxy, $C_1$-$C_8$-cyanoalkoxy, $C_4$-$C_8$-cycloalkylalkoxy, $C_3$-$C_6$-cycloalkoxy, $C_2$-$C_8$-alkoxyalkoxy, $C_1$-$C_8$-alkylcarbonylalkoxy, $C_1$-$C_8$-alkylsulfanyl, $C_1$-$C_8$-halogenoalkylsulfanyl, $C_2$-$C_8$-alkenyloxy, $C_2$-$C_8$-halogenoalkenyloxy, $C_3$-$C_8$-alkynyloxy, $C_3$-$C_8$-halogenoalkynyloxy, $C_1$-$C_8$-alkylcarbonyl, $C_1$-$C_8$-halogenoalkylcarbonyl, $C_3$-$C_8$-cycloalkylcarbonyl, $C_3$-$C_8$-halogenocycloalkylcarbonyl, $C_1$-$C_8$-alkylcarbamoyl, di-$C_1$-$C_8$-alkylcarbamoyl, N-$C_1$-$C_8$-alkyloxycarbamoyl, $C_1$-$C_8$-alkoxycarbamoyl, N-$C_1$-$C_8$-alkyl-$C_1$-$C_8$-alkoxycarbamoyl, $C_1$-$C_8$-alkoxycarbonyl, $C_1$-$C_8$-halogenoalkoxycarbonyl, $C_3$-$C_8$-cycloalkoxycarbonyl, $C_2$-$C_8$-alkoxyalkylearbonyl, $C_2$-$C_8$-halogenoalkoxyalkylcarbonyl, $C_3$-$C_{10}$-cycloalkoxyalkylcarbonyl, $C_1$-$C_8$-alkylaminocarbonyl, di-$C_1$-$C_8$-alkylaminocarbonyl, $C_3$-$C_8$-cycloalkylaminocarbonyl, $C_1$-$C_8$-alkylcarbonyloxy, $C_1$-$C_8$-halogenoalkylcarbonyloxy, $C_3$-$C_8$-cycloalkylcarbonyloxy, $C_1$-$C_8$-alkylcarbonylamino, $C_1$-$C_8$-halogenoalkylcarbonylamino, $C_1$-$C_8$-alkylaminocarbonyloxy, di-$C_1$-$C_8$-alkylaminocarbonyloxy, $C_1$-$C_8$-alkyloxycarbonyloxy, $C_1$-$C_8$-alkylsulfinyl, $C_1$-$C_8$-halogenoalkylsulfinyl, $C_1$-$C_8$-alkylsulfonyl, $C_1$-$C_8$-halogenoalkylsulfonyl, $C_1$-$C_8$-alkylsulfonyloxy, $C_1$-$C_8$-halogenoalkylsulfonyloxy, $C_1$-$C_8$-alkylaminosulfamoyl, di-$C_1$-$C_8$-alkylaminosulfamoyl, ($C_1$-$C_8$-alkoxyimino)-$C_1$-$C_8$-alkyl, ($C_3$-$C_7$-cycloalkoxyimino)-$C_1$-$C_8$-alkyl, hydroxyimino-$C_1$-$C_8$-alkyl, ($C_1$-$C_8$-alkoxyimino)-$C_3$-$C_7$-cycloalkyl, hydroxyimino-$C_3$-$C_7$-cycloalkyl, ($C_1$-$C_8$-alkylimino)-oxy, ($C_1$-$C_8$-alkylimino)-oxy-$C_1$-$C_8$-alkyl, ($C_3$-$C_7$-cycloalkylimino)-oxy-$C_1$-$C_8$-alkyl, ($C_1$-$C_6$-alkylimino)-oxy-$C_3$-$C_7$-cycloalkyl, ($C_1$-$C_8$-alkenyloxyimino)-$C_1$-$C_8$-alkyl, ($C_1$-$C_8$-alkynyloxyimino)-$C_1$-$C_8$-alkyl, 2-oxopyrrolidin-1-yl, (benzyloxyimino)-$C_1$-$C_8$-alkyl, $C_1$-$C_8$-alkoxyalkyl, $C_1$-$C_8$-alkylthioalkyl, $C_1$-$C_8$-alkoxyalkoxyalkyl, $C_1$-$C_8$-halogenoalkoxyalkyl, benzyl, phenyl, 5-membered heteroaryl, 6-membered heteroaryl, benzyloxy, phenyloxy, benzylsulfanyl, benzylamino, phenoxy, phenylsulfanyl, or phenylamino, wherein the benzyl, phenyl, 5-membered heteroaryl, 6-membered heteroaryl, benzyloxy or phenyloxy may be optionally substituted by one or more group(s) selected from the aforementioned list.

Depending on the nature of the substituents, the compounds of formula (I-1-Q-I-1) can be present as mixtures of different possible isomeric forms, in particular of stereoisomers, such as, for example, E and Z, threo and erythro, and also optical isomers, and, if appropriate, also of tautomers. If applicable, compounds of formula (I-1-Q-I-1) comprise both the E and the Z isomers, and also the threo and erythro, and the optical isomers, any mixtures of these isomers, and the possible tautomeric forms.

Depending on the nature of the substituents, the compounds of formula (I-1-Q-I-1) can exist in one or more optical or chiral isomer forms depending on the number of asymmetric centres in the compound. The invention thus relates equally to combinations comprising any of the optical isomers and their racemic or scalemic mixtures (the term "scalemic" denotes a mixture of enantiomers in different proportions) and mixtures of all the possible stereoisomers, in all proportions. The diastereoisomers and/or the optical isomers can be separated according to the methods which are known per se by the man ordinary skilled in the art.

Depending on the nature of the substituents, the compounds of formula (I-1-Q-I-1) can also exist in one or more geometric isomer forms depending on the number of double bonds in the compound. The invention thus relates equally to all geometric isomers and to all possible mixtures, in all proportions. The geometric isomers can be separated according to general methods, which are known per se by the man ordinary skilled in the art.

Depending on the nature of the substituents, the compounds of formula (I-1-Q-I-1) can also exist in one or more geometric isomer forms depending on the relative position (syn/anti or cis/trans) of the substituents of ring B. The invention thus relates equally to all syn/anti (or cis/trans) isomers and to all possible syn/anti (or cis/trans) mixtures, in all proportions. The syn/anti (or cis/trans) isomers can be separated according to general methods, which are known per se by the man ordinary skilled in the art.

**Illustration of synthesis of compounds of formula (I-1-Q-I-1) and intermediates**

The compounds of formula (I-1-Q-I-1) can be obtained by various routes in analogy to prior art processes known (see e.g. EP-A 461 502, DE-A 40 27 608, DE-A 32 35 935 and references therein) and by synthesis routes shown schematically in WO-A 2016/156290 (Processes A to P) and in the experimental part of that application.

***Further active compounds***

The active compound combinations according to the invention comprise (B) at least one further active compound selected from inhibitors of the ergosterol synthesis.

Preferred compound combinations according to the invention comprise (B) at least one further active compound selected from:

inhibitors of the ergosterol synthesis selected from the group consisting of (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) Pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2-[4-(4-chlorophenoxy)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chlorocyclopropyl)-4-[(1S)-2,2-dichlorocyclopropyl]-1-(1H-1,2,4-triazol-1-yl)butan-2-ol, (1.033) (2S)-2-[4-(4-chlorophenoxy)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{[rel(2R,3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2F,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) 2-[4-(4-chlorophenoxy)-2-(trifluoromethyl)phenyl]-1-(1H-1,2,4-triazol-1-yl)propan-2-ol, (1.056) 2-{[3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.058) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-{[3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidoformamide, (1.067) N'-(2,5-dimethyl-4-{3-[(1,1,2,2-tetrafluoroethyl)sulfanyl]phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]phenoxy}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{[3-(difluoromethoxy)phenyl]sulfanyl}2,5-dimethylphenyl)-N-ethyl-N-methylimidoformamide, (1.073) N'-(4-{3-[(difluoromethyl)sulfanyl]phenoxy}-2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimidoformamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(1R)-1-(3,5-difluorophenyl)ethoxy]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{5-bromo-6-[(cis-4-isopropylcyclohexyl)oxy]-2-methylpyridin-3-yl}-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimidoformamide, (1.081) Mefentrifluconazole, and (1.082) Ipfentrifluconazole.

More preferred compound combinations according to the invention comprise (B) at least one further active compound selected from:

(1.001) cyproconazole, (1.002) difenoconazole, (1.003) epoxiconazole, (1.004) fenhexamid, (1.012) ipconazole, (1.013) metconazole, (1.015) paclobutrazol, (1.017) propiconazole, (1.018) prothioconazole, (1.020) spiroxamine, (1.021) tebuconazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.059) 5-(4-chlorobenzyl)-2-(chloromethyl)-2-methyl-1-(1H-1,2,4-triazol-1-ylmethyl)cyclopentanol, (1.081) Mefentrifluconazole, and (1.082) Ipfentrifluconazole.

Even more preferred compound combinations according to the invention comprise (B) at least one further active compound selected from:

(1.002) difenoconazole, (1.012) ipconazole, (1.015) paclobutrazol, (1.018) prothioconazole, (1.020) spiroxamine, (1.021) tebuconazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.059) 5-(4-chlorobenzyl)-2-(chloromethyl)-2-methyl-1-(1H-1,2,4-triazol-1-ylmethyl)cyclopentanol, (1.081) Mefentrifluconazole, and (1.082) Ipfentrifluconazole.

Even more preferred compound combinations according to the invention comprise (B) at least one further active compound selected from:

(1.012) ipconazole, (1.015) paclobutrazol, (1.018) prothioconazole, (1.020) spiroxamine, (1.021) tebuconazole.

Even more preferred compound combinations according to the invention comprise (B) at least one further active compound selected from:

(1.012) ipconazole, (1.018) prothioconazole, (1.020) spiroxamine, (1.021) tebuconazole.

Most preferred compound combinations according to the invention comprise (B) at least one further active compound selected from:

(1.018) prothioconazole and (1.020) spiroxamine.

Preferred compound combinations are selected from the group (G1) consisting of the following mixtures:

(I-34) + (1.001), (I-34) + (1.002), (I-34) + (1.003), (I-34) + (1.004), (I-34) + (1.005), (I-34) + (1.006), (I-34) + (1.007), (I-34) + (1.008), (I-34) + (1.009), (I-34) + (1.010), (I-34) + (1.011), (I-34) + (1.012), (I-34) + (1.013), (I-34) + (1.014), (I-34) + (1.015), (I-34) + (1.016), (I-34) + (1.017), (I-34) + (1.018), (I-34) + (1.019), (I-34) + (1.020), (I-34) + (1.021), (I-34) + (1.022), (I-34) + (1.023), (I-34) + (1.024), (I-34) + (1.025), (I-34) + (1.026), (I-34) + (1.027), (I-34) + (1.028), (I-34) + (1.029), (I-34) + (1.030), (I-34) + (1.031), (I-34) + (1.032), (I-34) + (1.033), (I-34) + (1.034), (I-34) + (1.035), (I-34) + (1.036), (I-34) + (1.037), (I-34) + (1.038), (I-34) + (1.039), (I-34) + (1.040), (I-34) + (1.041), (I-34) + (1.042), (I-34) + (1.043), (I-34) + (1.044), (I-34) + (1.045), (I-34) + (1.046), (I-34) + (1.047), (I-34) + (1.048), (I-34) + (1.049), (I-34) + (1.050), (I-34) + (1.051), (I-34) + (1.052), (I-34) + (1.053), (I-34) + (1.054), (I-34) + (1.055), (I-34) + (1.056), (I-34) + (1.057), (I-34) + (1.058), (I-34) + (1.059), (I-34) + (1.060), (I-34) + (1.061), (I-34) + (1.062), (I-34) + (1.063), (I-34) + (1.064), (I-34) + (1.065), (I-34) + (1.066), (I-34) + (1.067), (I-34) + (1.068), (I-34) + (1.069), (I-34) + (1.070), (I-34) + (1.071), (I-34) + (1.072), (I-34) + (1.073), (I-34) + (1.074), (I-34) + (1.075), (I-34) + (1.076), (I-34) + (1.077), (I-34) + (1.078), (I-34) + (1.079), (I-34) + (1.080), (I-34) + (1.081), (I-34) + (1.082).

Also preferred compound combinations are selected from the group (G2) consisting of the following mixtures:

(I-132) + (1.001), (I-132) + (1.002), (I-132) + (1.003), (I-132) + (1.004), (I-132) + (1.005), (I-132) + (1.006), (I-132) + (1.007), (I-132) + (1.008), (I-132) + (1.009), (I-132) + (1.010), (I-132) + (1.011), (I-132) + (1.012), (I-132) + (1.013), (I-132) + (1.014), (I-132) + (1.015), (I-132) + (1.016), (I-132) + (1.017), (I-132) + (1.018), (I-132) + (1.019), (I-132) + (1.020), (I-132) + (1.021), (I-132) + (1.022), (I-132) + (1.023), (I-132) + (1.024), (I-132) + (1.025), (I-132) + (1.026),

(I-132) + (1.027), (I-132) + (1.028), (I-132) + (1.029), (I-132) + (1.030), (I-132) + (1.031), (I-132) + (1.032), (I-132) + (1.033), (I-132) + (1.034), (I-132) + (1.035), (I-132) + (1.036), (I-132) + (1.037), (I-132) + (1.038), (I-132) + (1.039), (I-132) + (1.040), (I-132) + (1.041), (I-132) + (1.042), (I-132) + (1.043), (I-132) + (1.044), (I-132) + (1.045), (I-132) + (1.046), (I-132) + (1.047), (I-132) + (1.048), (I-132) + (1.049), (I-132) + (1.050), (I-132) + (1.051), (I-132) + (1.052), (I-132) + (1.053), (I-132) + (1.054), (I-132) + (1.055), (I-132) + (1.056), (I-132) + (1.057), (I-132) + (1.058), (I-132) + (1.059), (I-132) + (1.060), (I-132) + (1.061), (I-132) + (1.062), (I-132) + (1.063), (I-132) + (1.064), (I-132) + (1.065), (I-132) + (1.066), (I-132) + (1.067), (I-132) + (1.068), (I-132) + (1.069), (I-132) + (1.070), (I-132) + (1.071), (I-132) + (1.072), (I-132) + (1.073), (I-132) + (1.074), (I-132) + (1.075), (I-132) + (1.076), (I-132) + (1.077), (I-132) + (1.078), (I-132) + (1.079), (I-132) + (1.080), (I-132) + (1.081), (I-132) + (1.082).

Also preferred compound combinations are selected from the group (G3) consisting of the following mixtures:

(I-133) + (1.001), (I-133) + (1.002), (I-133) + (1.003), (I-133) + (1.004), (I-133) + (1.005), (I-133) + (1.006), (I-133) + (1.007), (I-133) + (1.008), (I-133) + (1.009), (I-133) + (1.010), (I-133) + (1.011), (I-133) + (1.012), (I-133) + (1.013), (I-133) + (1.014), (I-133) + (1.015), (I-133) + (1.016), (I-133) + (1.017), (I-133) + (1.018), (I-133) + (1.019), (I-133) + (1.020), (I-133) + (1.021), (I-133) + (1.022), (I-133) + (1.023), (I-133) + (1.024), (I-133) + (1.025), (I-133) + (1.026), (I-133) + (1.027), (I-133) + (1.028), (I-133) + (1.029), (I-133) + (1.030), (I-133) + (1.031), (I-133) + (1.032), (I-133) + (1.033), (I-133) + (1.034), (I-133) + (1.035), (I-133) + (1.036), (I-133) + (1.037), (I-133) + (1.038), (I-133) + (1.039), (I-133) + (1.040), (I-133) + (1.041), (I-133) + (1.042), (I-133) + (1.043), (I-133) + (1.044), (I-133) + (1.045), (I-133) + (1.046), (I-133) + (1.047), (I-133) + (1.048), (I-133) + (1.049), (I-133) + (1.050), (I-133) + (1.051), (I-133) + (1.052), (I-133) + (1.053), (I-133) + (1.054), (I-133) + (1.055), (I-133) + (1.056), (I-133) + (1.057), (I-133) + (1.058), (I-133) + (1.059), (I-133) + (1.060), (I-133) + (1.061), (I-133) + (1.062), (I-133) + (1.063), (I-133) + (1.064), (I-133) + (1.065), (I-133) + (1.066), (I-133) + (1.067), (I-133) + (1.068), (I-133) + (1.069), (I-133) + (1.070), (I-133) + (1.071), (I-133) + (1.072), (I-133) + (1.073), (I-133) + (1.074), (I-133) + (1.075), (I-133) + (1.076), (I-133) + (1.077), (I-133) + (1.078), (I-133) + (1.079), (I-133) + (1.080), (I-133) + (1.081), (I-133) + (1.082).

Also preferred compound combinations are selected from the group (G4) consisting of the following mixtures:

(I-145) + (1.001), (I-145) + (1.002), (I-145) + (1.003), (I-145) + (1.004), (I-145) + (1.005), (I-145) + (1.006), (I-145) + (1.007), (I-145) + (1.008), (I-145) + (1.009), (I-145) + (1.010), (I-145) + (1.011), (I-145) + (1.012), (I-145) + (1.013), (I-145) + (1.014), (I-145) + (1.015), (I-145) + (1.016), (I-145) + (1.017), (I-145) + (1.018), (I-145) + (1.019), (I-145) + (1.020), (I-145) + (1.021), (I-145) + (1.022), (I-145) + (1.023), (I-145) + (1.024), (I-145) + (1.025), (I-145) + (1.026), (I-145) + (1.027), (I-145) + (1.028), (I-145) + (1.029), (I-145) + (1.030), (I-145) + (1.031), (I-145) + (1.032), (I-145) + (1.033), (I-145) + (1.034), (I-145) + (1.035), (I-145) + (1.036), (I-145) + (1.037), (I-145) + (1.038), (I-145) + (1.039), (I-145) + (1.040), (I-145) + (1.041), (I-145) + (1.042), (I-145) + (1.043), (I-145) + (1.044), (I-145) + (1.045), (I-145) + (1.046), (I-145) + (1.047), (I-145) + (1.048), (I-145) + (1.049), (I-145) + (1.050), (I-145) + (1.051), (I-145) + (1.052), (I-145) + (1.053), (I-145) + (1.054), (I-145) + (1.055), (I-145) + (1.056), (I-145) + (1.057), (I-145) + (1.058), (I-145) + (1.059), (I-145) + (1.060), (I-145) + (1.061), (I-145) + (1.062), (I-145) + (1.063), (I-145) + (1.064), (I-145) + (1.065), (I-145) + (1.066), (I-145) + (1.067), (I-145) + (1.068), (I-145) + (1.069), (I-145) + (1.070), (I-145) + (1.071), (I-145) + (1.072), (I-145) + (1.073), (I-145) + (1.074), (I-145) + (1.075), (I-145) + (1.076), (I-145) + (1.077), (I-145) + (1.078), (I-145) + (1.079), (I-145) + (1.080), (I-145) + (1.081), (I-145) + (1.082).

More preferred the compound combinations are selected from the mixtures belonging to groups (G1), or (G4).

Even more preferred compound combinations are also selected from the group (G1-A) consisting of the following mixtures:

(I-34) + (1.012), (I-34) + (1.015), (I-34) + (1.018), (I-34) + (1.020), (I-34) + (1.021).

Even more preferred compound combinations are also selected from the group (G2-A) consisting of the following mixtures:

(I-132) + (1.012), (1-132) + (1.015), (1-132) + (1.018), (1-132) + (1.020), (1-132) + (1.021).

Even more preferred compound combinations are also selected from the group (G3-A) consisting of the following mixtures:

(I-133) + (1.012), (I-133) + (1.015), (I-133) + (1.018), (I-133) + (1.020), (I-133) + (1.021).

Even more preferred compound combinations are also selected from the group (G4-A) consisting of the following mixtures:

(I-145) + (1.012), (I-145) + (1.015), (I-145) + (1.018), (I-145) + (1.020), (I-145) + (1.021).

Even more preferred the compound combinations are selected from the mixtures belonging to groups (G1-A), or (G4-A).

In one particular preferred embodiment the compound combinations are selected from the group (G1-B) consisting of the following mixtures:

(I-34) + (1.012), (I-34) + (1.018), (I-34) + (1.020), (I-34) + (1.021), preferably (I-34) + (1.018), (I-34) + (1.020).

In a further particular preferred embodiment the compound combinations are selected from the group (G2-B) consisting of the following mixtures:

(I-145) + (1.012), (I-145) + (1.018), (I-145) + (1.020), (I-145) + (1.021), preferably (I-145) + (1.018), (I-145) + (1.020).

In the combinations according to the invention the compounds (A), i.e. imidazole derivatives of formula (I-1-Q-I-1), and (B), i.e. further active compounds selected from groups (1) to (15), can be present in a broad range of effective weight ratio of A:B, for example in a range of 100:1 to 1:100, preferably in a weight ratio of 50:1 to 1:50, most preferably in a weight ratio of 20:1 to 1:20. Further ratios of A:B which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3,2:1 to 1:2.

Where a compound (A) or a compound (B) can be present in isomeric forms, including tautomeric forms, such a compound is understood hereinabove and hereinbelow also to include, where applicable, corresponding isomeric and/or tautomeric forms or mixtures thereof, even when these are not specifically mentioned in each case.

*Methods and uses*

The invention also relates to a method for controlling unwanted microorganisms, characterized in that a compound combination according to the invention or a composition comprising such combination is applied to the microorganisms and/or in their habitat.

The invention further relates to seed which has been treated with a compound combination according to the invention or a composition comprising such combination.

The invention also provides a method for protecting seed against unwanted microorganisms by using seed treated with a compound combination according to the invention or a composition comprising such combination.

The invention further relates to the use of at least one imidazole derivative selected from the group consisting of compound (I-34) 1-[2-(1-chlorocyclopropyl)-3-(2-fluorophenyl)-2-hydroxypropyl]-1*H*-imidazole-5-carbonitrile, and compound (I-145) 1-[3-(3-chloro-2-fluorophenyl)-2-(1-chlorocyclopropyl)-2-hydroxypropyl]-1H-imidazole-5-carbonitrile for improving fish compability of a fungicidal composition comprising at least one fungicide selected from (1.012) ipconazole, (1.018) prothioconazole, (1.020) spiroxamine, and (1.021) tebuconazole.

The compound combinations according to the invention and compositions comprising such combination have potent microbicidal activity and can be used for control of unwanted microorganisms, such as fungi and bacteria, in crop protection and in the protection of materials.

The compound combinations according to the invention and compositions comprising such combination have very good fungicidal properties and can be used in crop protection, for example for control of Plasmodiophoromycetes, Oomycetes, Chytridiomycetes, Zygomycetes, Ascomycetes, Basidiomycetes and Deuteromycetes.

Bactericides can be used in crop protection, for example, for control of Pseudomonadaceae, Rhizobiaceae, Enterobacteriaceae, Corynebacteriaceae and Streptomycetaceae.

The compound combinations according to the invention and compositions comprising such combination can be used for curative or protective control of phytopathogenic fungi. The invention therefore also relates to curative and protective methods for controlling phytopathogenic fungi by the use of the inventive combinations or compositions, which are applied to the seed, the plant or plant parts, the fruit or the soil in which the plants grow.

*Plants*

All plants and plant parts can be treated in accordance with the invention. Plants are understood here to mean

all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the transgenic plants and including the plant cultivars which are protectable and non-protectable by plant breeders' rights. Plant parts are understood to mean all parts and organs of plants above and below the ground, such as shoot, leaf, flower and root, examples of which include leaves, needles, stalks, stems, flowers, fruit bodies, fruits and seeds, and also roots, tubers and rhizomes. The plant parts also include harvested material and vegetative and generative propagation material, for example cuttings, tubers, rhizomes, slips and seeds.

Plants which can be treated in accordance with the invention include the following: cotton, flax, grapevine, fruit, vegetables, such as *Rosaceae sp.* (for example pome fruits such as apples and pears, but also stone fruits such as apricots, cherries, almonds and peaches, and soft fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for example banana trees and plantations), *Rubiaceae sp.* (for example coffee), *Theaceae sp., Sterculiceae sp., Rutaceae sp.* (for example lemons, oranges and grapefruit); *Solanaceae sp.* (for example tomatoes), *Liliaceae sp., Asteraceae sp.* (for example lettuce), *Umbelliferae sp., Cruciferae sp., Chenopodiaceae sp., Cucurbitaceae sp.* (for example cucumber), *Alliaceae sp.* (for example leek, onion), *Papilionaceae sp.* (for example peas); major crop plants, such as *Gramineae sp.* (for example maize, turf, cereals such as wheat, rye, rice, barley, oats, millet and triticale), *Asteraceae sp.* (for example sunflower), *Brassicaceae sp.* (for example white cabbage, red cabbage, broccoli, cauliflower, Brussels sprouts, pak choi, kohlrabi, radishes, and oilseed rape, mustard, horseradish and cress), *Fabacae sp.* (for example bean, peanuts), *Papilionaceae sp.* (for example soya bean), *Solanaceae sp.* (for example potatoes), *Chenopodiaceae sp.* (for example sugar beet, fodder beet, swiss chard, beetroot); useful plants and ornamental plants for gardens and wooded areas; and genetically modified varieties of each of these plants.

*Pathogens*

Non-limiting examples of pathogens of fungal diseases which can be treated in accordance with the invention include:

diseases caused by powdery mildew pathogens, for example Blumeria species, for example Blumeria graminis; Podosphaera species, for example Podosphaera leucotricha; Sphaerotheca species, for example Sphaerotheca fuliginea; Uncinula species, for example Uncinula necator;

diseases caused by rust disease pathogens, for example Gymnosporangium species, for example Gymnosporangium sabinae; Hemileia species, for example Hemileia vastatrix; Phakopsora species, for example Phakopsora pachyrhizi or Phakopsora meibomiae; Puccinia species, for example Puccinia recondita, Puccinia graminis oder Puccinia striiformis; Uromyces species, for example Uromyces appendiculatus;

diseases caused by pathogens from the group of the Oomycetes, for example Albugo species, for example Albugo candida; Bremia species, for example Bremia lactucae; Peronospora species, for example Peronospora pisi or P. brassicae; Phytophthora species, for example Phytophthora infestans; Plasmopara species, for example Plasmopara viticola; Pseudoperonospora species, for example Pseudoperonospora humuli or Pseudoperonospora cubensis; Pythium species, for example Pythium ultimum;

leaf blotch diseases and leaf wilt diseases caused, for example, by Alternaria species, for example Alternaria solani; Cercospora species, for example Cercospora beticola; Cladiosporium species, for example Cladiosporium cucumerinum; Cochliobolus species, for example Cochliobolus sativus (conidial form: Drechslera, syn: Helminthosporium) or Cochliobolus miyabeanus; Colletotrichum species, for example Colletotrichum lindemuthanium; Cycloconium species, for example Cycloconium oleaginum; Diaporthe species, for example Diaporthe citri; Elsinoe species, for example Elsinoe fawcettii; Gloeosporium species, for example Gloeosporium laeticolor; Glomerella species, for example Glomerella cingulata; Guignardia species, for example Guignardia bidwelli; Leptosphaeria species, for example Leptosphaeria maculans; Magnaporthe species, for example Magnaporthe grisea; Microdochium species, for example Microdochium nivale; Mycosphaerella species, for example Mycosphaerella graminicola, Mycosphaerella arachidicola or Mycosphaerella fijiensis; Phaeosphaeria species, for example Phaeosphaeria nodorum; Pyrenophora species, for example Pyrenophora teres or Pyrenophora tritici repentis; Ramularia species, for example Ramularia collocygni or Ramularia areola; Rhynchosporium species, for example Rhynchosporium secalis; Septoria species, for example Septoria apii or Septoria lycopersici; Stagonospora species, for example Stagonospora nodorum; Typhula species, for example Typhula incarnata; Venturia species, for example Venturia inaequalis;

root and stem diseases caused, for example, by Corticium species, for example Corticium graminearum; Fusarium species, for example Fusarium oxysporum; Gaeumannomyces species, for example Gaeumannomyces graminis; Plasmodiophora species, for example Plasmodiophora brassicae; Rhizoctonia species, for example Rhizoctonia solani; Sarocladium species, for example Sarocladium oryzae; Sclerotium species, for example Sclerotium oryzae; Tapesia species, for example Tapesia acuformis; Thielaviopsis species, for example Thielaviopsis basicola;

ear and panicle diseases (including corn cobs) caused, for example, by Alternaria species, for example Alternaria spp.; Aspergillus species, for example Aspergillus flavus; Cladosporium species, for example Cladosporium cladosporioides; Claviceps species, for example Claviceps purpurea; Fusarium species, for example Fusarium culmorum; Gibberella species, for example Gibberella zeae; Monographella species, for example Monographella nivalis; Stagnospora species, for example Stagnospora nodorum;

diseases caused by smut fungi, for example Sphacelotheca species, for example Sphacelotheca reiliana; Tilletia species, for example Tilletia caries or Tilletia controversa; Urocystis species, for example Urocystis occulta; Ustilago species, for example Ustilago nuda;

fruit rot caused, for example, by Aspergillus species, for example Aspergillus flavus; Botrytis species, for example Botrytis cinerea; Penicillium species, for example Penicillium expansum or Penicillium purpurogenum; Rhizopus species, for example Rhizopus stolonifer; Sclerotinia species, for example Sclerotinia sclerotiorum; Verticilium species, for example Verticilium alboatrum;

seed- and soil-borne rot and wilt diseases, and also diseases of seedlings, caused, for example, by Alternaria species, for example Alternaria brassicicola; Aphanomyces species, for example Aphanomyces euteiches; Ascochyta species, for example Ascochyta lentis; Aspergillus species, for example Aspergillus flavus; Cladosporium species, for example Cladosporium herbarum; Cochliobolus species, for example Cochliobolus sativus (conidial form: Drechslera, Bipolaris Syn: Helminthosporium); Colletotrichum species, for example Colletotrichum coccodes; Fusarium species, for example Fusarium culmorum; Gibberella species, for example Gibberella zeae; Macrophomina species, for example Macrophomina phaseolina; Microdochium species, for example Microdochium nivale; Monographella species, for example Monographella nivalis; Penicillium species, for example Penicillium expansum; Phoma species, for example Phoma lingam; Phomopsis species, for example Phomopsis sojae; Phytophthora species, for example Phytophthora cactorum; Pyrenophora species, for example Pyrenophora graminea; Pyricularia species, for example Pyricularia oryzae; Pythium species, for example Pythium ultimum; Rhizoctonia species, for example Rhizoctonia solani; Rhizopus species, for example Rhizopus oryzae; Sclerotium species, for example Sclerotium rolfsii; Septoria species, for example Septoria nodorum; Typhula species, for example Typhula incarnata; Verticillium species, for example Verticillium dahliae;

cancers, galls and witches' broom caused, for example, by Nectria species, for example Nectria galligena;

wilt diseases caused, for example, by Monilinia species, for example Monilinia laxa;

deformations of leaves, flowers and fruits caused, for example, by Exobasidium species, for example Exobasidium vexans; Taphrina species, for example Taphrina deformans;

degenerative diseases in woody plants, caused, for example, by Esca species, for example Phaeomoniella chlamydospora, Phaeoacremonium aleophilum or Fomitiporia mediterranea; Ganoderma species, for example Ganoderma boninense;

diseases of flowers and seeds caused, for example, by Botrytis species, for example Botrytis cinerea;

diseases of plant tubers caused, for example, by Rhizoctonia species, for example Rhizoctonia solani; Helminthosporium species, for example Helminthosporium solani;

diseases caused by bacterial pathogens, for example Xanthomonas species, for example Xanthomonas campestris pv. oryzae; Pseudomonas species, for example Pseudomonas syringae pv. lachrymans; Erwinia species, for example Erwinia amylovora.

Preference is given to controlling the following diseases of soya beans:

Fungal diseases on leaves, stems, pods and seeds caused, for example, by Alternaria leaf spot (Alternaria spec. atrans tenuissima), Anthracnose (Colletotrichum gloeosporoides dematium var. truncatum), brown spot (Septoria glycines), cercospora leaf spot and blight (Cercospora kikuchii), choanephora leaf blight (Choanephora infundibulifera trispora (Syn.)), dactuliophora leaf spot (Dactuliophora glycines), downy mildew (Peronospora manshurica), drechslera blight (Drechslera glycini), frogeye leaf spot (Cercospora sojina), leptosphaerulina leaf spot (Leptosphaerulina trifolii), phyllostica leaf spot (Phyllosticta sojaecola), pod and stem blight (Phomopsis sojae), powdery mildew (Microsphaera diffusa), pyrenochaeta leaf spot (Pyrenochaeta glycines), rhizoctonia aerial, foliage, and web blight (Rhizoctonia solani), rust (Phakopsora pachyrhizi, Phakopsora meibomiae), scab (Sphaceloma glycines), stemphylium leaf blight (Stemphylium botryosum), target spot (Corynespora cassiicola).

Fungal diseases on roots and the stem base caused, for example, by black root rot (Calonectria crotalariae), charcoal rot (Macrophomina phaseolina), fusarium blight or wilt, root rot, and pod and collar rot (Fusarium oxysporum, Fusarium orthoceras, Fusarium semitectum, Fusarium equiseti), mycoleptodiscus root rot (Mycoleptodiscus terrestris), neocosmospora (Neocosmospora vasinfecta), pod and stem blight (Diaporthe phaseolorum), stem canker (Diaporthe phaseolorum var. caulivora), phytophthora rot (Phytophthora megasperma), brown stem rot (Phialophora gregata), pythium rot (Pythium aphanidermatum, Pythium irregulare, Pythium debaryanum, Pythium myriotylum, Pythium ultimum), rhizoctonia root rot, stem decay, and damping-off (Rhizoctonia solani), sclerotinia stem decay (Sclerotinia sclerotiorum), sclerotinia southern blight (Sclerotinia rolfsii), thielaviopsis root rot (Thielaviopsis basicola).

*Plant Growth Regulation*

In some cases, the compound combinations according to the invention and composition comprising such combination can, at particular concentrations or application rates, also be used as growth regulators or agents to improve plant properties, or as microbicides, for example as fungicides, antimycotics, bactericides, viricides (including compositions against viroids) or as compositions against MLO (Mycoplasma-like organisms) and RLO (Rickettsia-like organisms).

The compound combinations according to the invention and compositions comprising such combination intervene in physiological processes of plants and can therefore also be used as plant growth regulators. Plant growth regulators may exert various effects on plants. The effect of the substances depends essentially on the time of application in relation to the developmental stage of the plant, and also on the amounts of active ingredient applied to the plants or their environment and on the type of application. In each case, growth regulators should have a particular desired effect on the crop plants.

Growth regulating effects, comprise earlier germination, better emergence, more developed root system and/or improved root growth, increased ability of tillering, more productive tillers, earlier flowering, increased plant height and/or biomass, shorting of stems, improvements in shoot growth, number of kernels/ear, number of ears/$m^2$, number of stolons and/or number of flowers, enhanced harvest index, bigger leaves, less dead basal leaves, improved phyllotaxy, earlier maturation / earlier fruit finish, homogenous riping, increased duration of grain filling, better fruit finish, bigger fruit/vegetable size, sprouting resistance and reduced lodging.

Increased or improved yield is referring to total biomass per hectare, yield per hectare, kernel/fruit weight, seed size and/or hectolitre weight as well as to improved product quality, comprising:

improved processability relating to size distribution (kernel, fruit, etc.), homogenous riping, grain moisture, better milling, better vinification, better brewing, increased juice yield, harvestability, digestibility, sedimentation value, falling number, pod stability, storage stability, improved fiber length/strength/uniformity, increase of milk and/or meet quality of silage fed animals, adaption to cooking and frying;

further comprising improved marketability relating to improved fruit/grain quality, size distribution (kernel, fruit, etc.), increased storage / shelf-life, firmness / softness, taste (aroma, texture, etc.), grade (size, shape, number of berries, etc.), number of berries/fruits per bunch, crispness, freshness, coverage with wax, frequency of physiological disorders, colour, etc.;

further comprising increased desired ingredients such as e.g. protein content, fatty acids, oil content, oil quality, aminoacid composition, sugar content, acid content (pH), sugar/acid ratio (Brix), polyphenols, starch content, nutritional quality, gluten content/index, energy content, taste, etc.;

and further comprising decreased undesired ingredients such as e.g. less mycotoxines, less aflatoxines, geosmin level, phenolic aromas, lacchase, polyphenol oxidases and peroxidases, nitrate content etc.

Plant growth-regulating compounds can be used, for example, to slow down the vegetative growth of the plants. Such growth depression is of economic interest, for example, in the case of grasses, since it is thus possible to reduce the frequency of grass cutting in ornamental gardens, parks and sport facilities, on roadsides, at airports or in fruit crops. Also of significance is the inhibition of the growth of herbaceous and woody plants on roadsides and in the vicinity of pipelines or overhead cables, or quite generally in areas where vigorous plant growth is unwanted.

Also important is the use of growth regulators for inhibition of the longitudinal growth of cereal. This reduces or completely eliminates the risk of lodging of the plants prior to harvest. In addition, growth regulators in the case of cereals can strengthen the culm, which also counteracts lodging. The employment of growth regulators for shortening and strengthening culms allows the deployment of higher fertilizer volumes to increase the yield, without any risk of lodging of the cereal crop.

In many crop plants, vegetative growth depression allows denser planting, and it is thus possible to achieve higher yields based on the soil surface. Another advantage of the smaller plants obtained in this way is that the crop is easier to cultivate and harvest.

Reduction of the vegetative plant growth may also lead to increased or improved yields because the nutrients and assimilates are of more benefit to flower and fruit formation than to the vegetative parts of the plants.

Alternatively, growth regulators can also be used to promote vegetative growth. This is of great benefit when harvesting the vegetative plant parts. However, promoting vegetative growth may also promote generative growth in that more assimilates are formed, resulting in more or larger fruits.

Furthermore, beneficial effects on growth or yield can be achieved through improved nutrient use efficiency, especially nitrogen (N)-use efficiency, phosphours (P)-use efficiency, water use efficiency, improved transpiration, respiration and/or CO2 assimilation rate, better nodulation, improved Ca-metabolism etc.

Likewise, growth regulators can be used to alter the composition of the plants, which in turn may result in an improvement in quality of the harvested products. Under the influence of growth regulators, parthenocarpic fruits may be formed. In addition, it is possible to influence the sex of the flowers. It is also possible to produce sterile pollen, which is of great importance in the breeding and production of hybrid seed.

Use of growth regulators can control the branching of the plants. On the one hand, by breaking apical dominance, it is possible to promote the development of side shoots, which may be highly desirable particularly in the cultivation of ornamental plants, also in combination with an inhibition of growth. On the other hand, however, it is also possible to inhibit the growth of the side shoots. This effect is of particular interest, for example, in the cultivation of tobacco or in the cultivation of tomatoes.

Under the influence of growth regulators, the amount of leaves on the plants can be controlled such that defoliation of the plants is achieved at a desired time. Such defoliation plays a major role in the mechanical harvesting of cotton, but is also of interest for facilitating harvesting in other crops, for example in viticulture. Defoliation of the plants can also be undertaken to lower the transpiration of the plants before they are transplanted.

Furthermore, growth regulators can modulate plant senescence, which may result in prolonged green leaf area duration, a longer grain filling phase, improved yield quality, etc.

Growth regulators can likewise be used to regulate fruit dehiscence. On the one hand, it is possible to prevent premature fruit dehiscence. On the other hand, it is also possible to promote fruit dehiscence or even flower abortion to achieve a desired mass ("thinning"). In addition it is possible to use growth regulators at the time of harvest to reduce the forces required to detach the fruits, in order to allow mechanical harvesting or to facilitate manual harvesting.

Growth regulators can also be used to achieve faster or else delayed ripening of the harvested material before or after harvest. This is particularly advantageous as it allows optimal adjustment to the requirements of the market. Moreover, growth regulators in some cases can improve the fruit colour. In addition, growth regulators can also be used to synchronize maturation within a certain period of time. This establishes the prerequisites for complete mechanical or manual harvesting in a single operation, for example in the case of tobacco, tomatoes or coffee.

By using growth regulators, it is additionally possible to influence the resting of seed or buds of the plants, such that plants such as pineapple or ornamental plants in nurseries, for example, germinate, sprout or flower at a time when they are normally not inclined to do so. In areas where there is a risk of frost, it may be desirable to delay budding or germination of seeds with the aid of growth regulators, in order to avoid damage resulting from late frosts.

Finally, growth regulators can induce resistance of the plants to frost, drought or high salinity of the soil. This allows the cultivation of plants in regions which are normally unsuitable for this purpose.

*Resistance Induction / Plant Health and other effects*

The compound combinations according to the invention and compositions comprising such combination also exhibit a potent strengthening effect in plants. Accordingly, they can be used for mobilizing the defences of the plant against attack by undesirable microorganisms.

Plant-strengthening (resistance-inducing) substances in the present context are substances capable of stimulating the defence system of plants in such a way that the treated plants, when subsequently inoculated with undesirable microorganisms, develop a high degree of resistance to these microorganisms.

Further, in context with the present invention plant physiology effects comprise the following:

Abiotic stress tolerance, comprising tolerance to high or low temperatures, drought tolerance and recovery after drought stress, water use efficiency (correlating to reduced water consumption), flood tolerance, ozone stress and UV tolerance, tolerance towards chemicals like heavy metals, salts, pesticides etc.

Biotic stress tolerance, comprising increased fungal resistance and increased resistance against nematodes, viruses and bacteria. In context with the present invention, biotic stress tolerance preferably comprises increased fungal resistance and increased resistance against nematodes.

Increased plant vigor, comprising plant health / plant quality and seed vigor, reduced stand failure, improved appearance, increased recovery after periods of stress, improved pigmentation (e.g. chlorophyll content, stay-green effects, etc.) and improved photosynthetic efficiency.

*Mycotoxins*

In addition, the compound combinations according to the invention and compositions comprising such combination can reduce the mycotoxin content in the harvested material and the foods and feeds prepared therefrom. Mycotoxins include particularly, but not exclusively, the following: deoxynivalenol (DON), nivalenol, 15-Ac-DON, 3-Ac-DON, T2- and HT2-toxin, fumonisins, zearalenon, moniliformin, fusarin, diaceotoxyscirpenol (DAS), beauvericin, enniatin, fusaroproliferin, fusarenol, ochratoxins, patulin, ergot alkaloids and aflatoxins which can be produced, for example, by the following fungi: *Fusarium* spec., such as *F. acuminatum, F. asiaticum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides* etc., and also by *Aspergillus* spec., such as *A. flavus, A. parasiticus, A. nomius, A. ochraceus, A. clavatus, A. terreus, A. versicolor, Penicillium* spec., such as *P. verrucosum, P. viridicatum, P. citrinum, P. expansum, P. claviforme, P. roqueforti, Claviceps* spec., such as *C. purpurea, C. fusiformis, C. paspali, C. african, Stachybotrys* spec. and others.

*Material Protection*

The compound combinations according to the invention and compositions comprising such combination can also be used in the protection of materials, for protection of industrial materials against attack and destruction by phytopathogenic fungi.

In addition, the compound combinations according to the invention and compositions comprising such combination can be used as antifouling compositions, alone or in combinations with other active ingredients.

Industrial materials in the present context are understood to mean inanimate materials which have been prepared for use in industry. For example, industrial materials which are to be protected by inventive compositions from microbial alteration or destruction may be adhesives, glues, paper, wallpaper and board/cardboard, textiles, carpets, leather, wood, fibers and tissues, paints and plastic articles, cooling lubricants and other materials which can be infected with or destroyed by microorganisms. Parts of production plants and buildings, for example cooling-water circuits, cooling and heating systems and ventilation and air-conditioning units, which may be impaired by the proliferation of microorganisms may also be mentioned within the scope of the materials to be protected. Industrial materials within the scope of the present invention preferably include adhesives, sizes, paper and card, leather, wood, paints, cooling lubricants and heat transfer fluids, more preferably wood.

The compound combinations according to the invention and compositions comprising such combination may prevent adverse effects, such as rotting, decay, discoloration, decoloration or formation of mould.

In the case of treatment of wood the compound combinations according to the invention and compositions comprising such combination may also be used against fungal diseases liable to grow on or inside timber. The term "timber" means all types of species of wood, and all types of working of this wood intended for construction, for example solid wood, high-density wood, laminated wood, and plywood. The method for treating timber according to the invention mainly consists in contacting a composition according to the invention; this includes for example direct application, spraying, dipping, injection or any other suitable means.

In addition, the compound combinations according to the invention and compositions comprising such combination can be used to protect objects which come into contact with saltwater or brackish water, especially hulls, screens, nets, buildings, moorings and signalling systems, from fouling.

The compound combinations according to the invention and compositions comprising such combination can

also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, can be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The inventive compositions may prevent adverse effects, such as rotting, decay, discoloration, decoloration or formation of mould.

Microorganisms capable of degrading or altering the industrial materials include, for example, bacteria, fungi, yeasts, algae and slime organisms. The compound combinations according to the invention and compositions comprising such combination preferably act against fungi, especially moulds, wood-discoloring and wood-destroying fungi (*Ascomycetes, Basidiomycetes, Deuteromycetes* and *Zygomycetes*), and against slime organisms and algae. Examples include microorganisms of the following genera: *Alternaria,* such as Alternaria *tenuis*; *Aspergillus,* such as *Aspergillus niger; Chaetomium,* such as *Chaetomium globosum; Coniophora,* such as *Coniophora puetana; Lentinus,* such as *Lentinus tigrinus; Penicillium,* such as *Penicillium glaucum*; *Polyporus,* such as *Polyporus versicolor; Aureobasidium,* such as *Aureobasidium pullulans*; *Sclerophoma,* such as *Sclerophoma pityophila*; *Trichoderma,* such as *Trichoderma viride; Ophiostoma spp., Ceratocystis spp., Humicola spp., Petriella spp., Trichurus spp., Coriolus spp., Gloeophyllum spp., Pleurotus spp., Poria spp., Serpula spp.* and *Tyromyces spp., Cladosporium spp., Paecilomyces spp. Mucor spp., Escherichia,* such as *Escherichia coli; Pseudomonas,* such as *Pseudomonas aeruginosa*; *Staphylococcus,* such as *Staphylococcus aureus, Candida spp.* and *Saccharomyces spp.,* such as *Saccharomyces cerevisae.*

*Formulations*

The present invention further relates to a composition for controlling unwanted microorganisms, comprising compound combinations according to the invention. These are preferably fungicidal compositions which comprise agriculturally suitable auxiliaries, solvents, carriers, surfactants or extenders.

According to the invention, a carrier is a natural or synthetic, organic or inorganic substance with which the active ingredients are mixed or combined for better applicability, in particular for application to plants or plant parts or seed. The carrier, which may be solid or liquid, is generally inert and should be suitable for use in agriculture.

Useful solid carriers include: for example ammonium salts and natural rock flours, such as kaolins, clays, talc, chalk, quartz, attapulgite, montmorillonite or diatomaceous earth, and synthetic rock flours, such as finely divided silica, alumina and silicates; useful solid carriers for granules include: for example, crushed and fractionated natural rocks such as calcite, marble, pumice, sepiolite and dolomite, and also synthetic granules of inorganic and organic flours, and granules of organic material such as paper, sawdust, coconut shells, maize cobs and tobacco stalks; useful emulsifiers and/or foam-formers include: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and also protein hydrolysates; suitable dispersants are nonionic and/or ionic substances, for example from the classes of the alcohol-POE and/or -POP ethers, acid and/or POP POE esters, alkylaryl and/or POP POE ethers, fat and/or POP POE adducts, POE- and/or POP-polyol derivatives, POE- and/or POP-sorbitan or -sugar adducts, alkyl or aryl sulphates, alkyl- or arylsulphonates and alkyl or aryl phosphates or the corresponding PO-ether adducts. Additionally suitable are oligo- or polymers, for example those derived from vinylic monomers, from acrylic acid, from EO and/or PO alone or in combination with, for example, (poly)alcohols or (poly)amines. It is also possible to use lignin and its sulphonic acid derivatives, unmodified and modified celluloses, aromatic and/or aliphatic sulphonic acids and also their adducts with formaldehyde.

The active ingredients can be converted to the customary formulations, such as solutions, emulsions, wettable powders, water- and oil-based suspensions, powders, dusts, pastes, soluble powders, soluble granules, granules for broadcasting, suspoemulsion concentrates, natural products impregnated with active ingredient, synthetic substances impregnated with active ingredient, fertilizers and also microencapsulations in polymeric substances.

The active ingredients can be applied as such, in the form of their formulations or the use forms prepared therefrom, such as ready-to-use solutions, emulsions, water- or oil-based suspensions, powders, wettable powders, pastes, soluble powders, dusts, soluble granules, granules for broadcasting, suspoemulsion concentrates, natural products impregnated with active ingredient, synthetic substances impregnated with active ingredient, fertilizers and also microencapsulations in polymeric substances. Application is accomplished in a customary manner, for example by watering, spraying, atomizing, broadcasting, dusting, foaming, spreading-on and the like. It is also possible to deploy the active ingredients by the ultra-low volume method or to inject the active ingredient preparation/the active ingredient itself into the soil. It is also possible to treat the seed of the plants.

The formulations mentioned can be prepared in a manner known per se, for example by mixing the active ingredients with at least one customary extender, solvent or diluent, emulsifier, dispersant and/or binder or fixing agent,

wetting agent, a water repellent, if appropriate siccatives and UV stabilizers and if appropriate dyes and pigments, antifoams, preservatives, secondary thickeners, stickers, gibberellins and also other processing auxiliaries.

The present invention includes not only formulations which are already ready for use and can be deployed with a suitable apparatus to the plant or the seed, but also commercial concentrates which have to be diluted with water prior to use.

The compound combinations according to the invention may be present as such or in their (commercial) formulations and in the use forms prepared from these formulations as a mixture with other (known) active ingredients, such as insecticides, attractants, sterilants, bactericides, acaricides, nematicides, growth regulators, herbicides, fertilizers, safeners and/or semiochemicals.

The auxiliaries used may be those substances which are suitable for imparting particular properties to the composition itself or and/or to preparations derived therefrom (for example spray liquors, seed dressings), such as certain technical properties and/or also particular biological properties. Typical auxiliaries include: extenders, solvents and carriers.

Suitable extenders are, for example, water, polar and nonpolar organic chemical liquids, for example from the classes of the aromatic and nonaromatic hydrocarbons (such as paraffins, alkylbenzenes, alkylnaphthalenes, chlorobenzenes), the alcohols and polyols (which may optionally also be substituted, etherified and/or esterified), the ketones (such as acetone, cyclohexanone), esters (including fats and oils) and (poly)ethers, the unsubstituted and substituted amines, amides, lactams (such as N-alkylpyrrolidones) and lactones, the sulphones and sulphoxides (such as dimethyl sulphoxide).

Liquefied gaseous extenders or carriers are understood to mean liquids which are gaseous at standard temperature and under standard pressure, for example aerosol propellants such as halohydrocarbons, or else butane, propane, nitrogen and carbon dioxide.

In the formulations it is possible to use tackifiers such as carboxymethylcellulose, natural and synthetic polymers in the form of powders, granules or latices, such as gum arabic, polyvinyl alcohol and polyvinyl acetate, or else natural phospholipids such as cephalins and lecithins and synthetic phospholipids. Further additives may be mineral and vegetable oils.

If the extender used is water, it is also possible to use, for example, organic solvents as auxiliary solvents. Useful liquid solvents are essentially: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example petroleum fractions, alcohols such as butanol or glycol and their ethers and esters, ketones such as acetone, methyl ethyl ketone, methyl isobutyl ketone or cyclohexanone, strongly polar solvents such as dimethylformamide and dimethyl sulphoxide, or else water.

Compositions comprising compound combinations according to the invention may additionally comprise further components, for example surfactants. Suitable surfactants are emulsifiers and/or foam formers, dispersants or wetting agents having ionic or nonionic properties, or mixtures of these surfactants. Examples thereof are salts of polyacrylic acid, salts of lignosulphonic acid, salts of phenolsulphonic acid or naphthalenesulphonic acid, polycondensates of ethylene oxide with fatty alcohols or with fatty acids or with fatty amines, substituted phenols (preferably alkylphenols or arylphenols), salts of sulphosuccinic esters, taurine derivatives (preferably alkyl taurates), phosphoric esters of polyethoxylated alcohols or phenols, fatty esters of polyols, and derivatives of the compounds containing sulphates, sulphonates and phosphates, for example alkylaryl polyglycol ethers, alkylsulphonates, alkyl sulphates, arylsulphonates, protein hydrolysates, lignosulphite waste liquors and methylcellulose. The presence of a surfactant is necessary if one of the active ingredients and/or one of the inert carriers is insoluble in water and when application is effected in water. The proportion of surfactants is between 5 and 40 per cent by weight of the inventive composition.

It is possible to use dyes such as inorganic pigments, for example iron oxide, titanium oxide and Prussian Blue, and organic dyes such as alizarin dyes, azo dyes and metal phthalocyanine dyes, and trace nutrients such as salts of iron, manganese, boron, copper, cobalt, molybdenum and zinc.

Further additives may be perfumes, mineral or vegetable, optionally modified oils, waxes and nutrients (including trace nutrients), such as salts of iron, manganese, boron, copper, cobalt, molybdenum and zinc.

Additional components may be stabilizers, such as cold stabilizers, preservatives, antioxidants, light stabilizers, or other agents which improve chemical and/or physical stability.

If appropriate, other additional components may also be present, for example protective colloids, binders, adhesives, thickeners, thixotropic substances, penetrants, stabilizers, sequestering agents, complex formers. In general, the active ingredients can be combined with any solid or liquid additive commonly used for formulation purposes.

The formulations contain generally between 0.05 and 99% by weight, 0.01 and 98% by weight, preferably between 0.1 and 95% by weight, more preferably between 0.5 and 90% of active ingredient, most preferably between 10 and 70 per cent by weight.

The formulations described above can be used for controlling unwanted microorganisms, in which the compositions comprising a compound combination according to the invention are applied to the microorganisms and/or in their

habitat.

*Mixtures*

Compound combinations according to the invention can be used as such or in formulations thereof and can be mixed with further known fungicides, bactericides, acaricides, nematicides or insecticides, in order thus to broaden, for example, the activity spectrum or to prevent development of resistance.

Useful mixing partners include, for example, known fungicides, insecticides, acaricides, nematicides or else bactericides (see also Pesticide Manual, 14th ed.).

A mixture with other known active ingredients, such as herbicides, or with fertilizers and growth regulators, safeners and/or semiochemicals, is also possible.

*Seed Treatment*

The invention furthermore includes a method for treating seed.

A further aspect of the present invention relates in particular to seeds (dormant, primed, pregerminated or even with emerged roots and leaves) treated with a compound combination according to the invention or a composition comprising such combination. The inventive seeds are used in methods for protection of seeds and emerged plants from the seeds from phytopathogenic harmful fungi. In these methods, seed treated with at least one inventive active ingredient is used.

The compound combinations according to the invention and compositions comprising such combination are also suitable for the treatment of seeds and young seedlings. A large part of the damage to crop plants caused by harmful organisms is triggered by the infection of the seeds before sowing or after germination of the plant. This phase is particularly critical since the roots and shoots of the growing plant are particularly sensitive, and even small damage may result in the death of the plant. Accordingly, there is great interest in protecting the seed and the germinating plant by using appropriate compositions.

It is also desirable to optimize the amount of the active ingredient used so as to provide the best possible protection for the seeds, the germinating plants and emerged seedlings from attack by phytopathogenic fungi, but without damaging the plants themselves by the active ingredient used. In particular, methods for the treatment of seed should also take into consideration the intrinsic phenotypes of transgenic plants in order to achieve optimum protection of the seed and the germinating plant with a minimum of crop protection compositions being employed.

The present invention therefore also relates to a method for protecting seeds, germinating plants and emerged seedlings against attack by animal pests and/or phytopathogenic harmful microorganisms by treating the seeds with an inventive combination or composition. The invention also relates to the use of the combinations or compositions according to the invention for treating seeds for protecting the seeds, the germinating plants and emerged seedlings against animal pests and/or phytopathogenic microorganisms. The invention further relates to seeds which has been treated with an inventive combination or composition for protection from animal pests and/or phytopathogenic microorganisms.

One of the advantages of the present invention is that the treatment of the seeds with these compositions not only protects the seed itself, but also the resulting plants after emergence, from animal pests and/or phytopathogenic harmful microorganisms. In this way, the immediate treatment of the crop at the time of sowing or shortly thereafter protect plants as well as seed treatment in prior to sowing. It is likewise considered to be advantageous that the inventive active ingredients combination or composition can be used especially also for transgenic seed, in which case the plant which grows from this seed is capable of expressing a protein which acts against pests, herbicidal damage or abiotic stress. The treatment of such seeds with the inventive active ingredients or compositions, for example an insecticidal protein, can result in control of certain pests.

The compound combinations according to the invention and compositions comprising such combination are suitable for protection of seed of any plant variety which is used in agriculture, in the greenhouse, in forests or in horticulture. More particularly, the seed is that of cereals (such as wheat, barley, rye, millet and oats), oilseed rape, maize, cotton, soybeen, rice, potatoes, sunflower, beans, coffee, beet (e.g. sugar beet and fodder beet), peanut, vegetables (such as tomato, cucumber, onions and lettuce), lawns and ornamental plants. Of particular significance is the treatment of the seed ofwheat, soybean, oilseed rape, maize and rice.

As also described below, the treatment of transgenic seed with the inventive active ingredients or compositions is of particular significance. This refers to the seed of plants containing at least one heterologous gene which allows the expression of a polypeptide or protein, e.g. having insecticidal properties. These heterologous genes in transgenic seeds may originate, for example, from microorganisms of the species Bacillus, Rhizobium, Pseudomonas, Serratia, Trichoderma, Clavibacter, Glomus or Gliocladium. These heterologous genes preferably originates from Bacillus sp., in which case the gene product is effective against the European corn borer and/or the Western corn rootworm. Particularly preferably, the heterologous genes originate from Bacillus thuringiensis.

In the context of the present invention, the inventive combination or composition is applied to seeds either alone or in a suitable formulation. Preferably, the seed is treated in a state in which it is sufficiently stable for no damage to occur in the course of treatment. In general, seeds can be treated at any time between harvest and some time after sowing. It is customary to use seed which has been separated from the plant and freed from cobs, shells, stalks, coats, hairs or the flesh of the fruits. For example, it is possible to use seed which has been harvested, cleaned and dried down to a moisture content of less than 15% by weight. Alternatively, it is also possible to use seed which, after drying, for example, has been treated with water and then dried again, or seeds just after priming, or seeds stored in primed conditions or pre-germinated seeds, or seeds sown on nursery trays, tapes or paper.

When treating the seeds, it generally has to be ensured that the amount of the inventive combination or composition applied to the seed and/or the amount of further additives is selected such that the germination of the seed is not impaired, or that the resulting plant is not damaged. This must be ensured particularly in the case of active ingredients which can exhibit phytotoxic effects at certain application rates.

The compound combinations according to the invention and compositions comprising such combination can be applied directly, i.e. without containing any other components and without having been diluted. In general, it is preferable to apply the compositions to the seed in the form of a suitable formulation. Suitable formulations and methods for seed treatment are known to those skilled in the art. The compound combinations according to the invention can be converted to the customary formulations relevant to on-seed applications, such as solutions, emulsions, suspensions, powders, foams, slurries or combined with other coating compositions for seed, such as film forming materials, pelleting materials, fine iron or other metal powders, granules, coating material for inactivated seeds, and also ULV formulations.

These formulations are prepared in a known manner, by mixing the active ingredients or active ingredient combinations with customary additives, for example customary extenders and solvents or diluents, dyes, wetting agents, dispersants, emulsifiers, antifoams, preservatives, secondary thickeners, adhesives, gibberellins, and also water.

Useful dyes which may be present in the seed dressing formulations usable in accordance with the invention are all dyes which are customary for such purposes. It is possible to use either pigments, which are sparingly soluble in water, or dyes, which are soluble in water. Examples include the dyes known by the names Rhodamine B, C.I. Pigment Red 112 and C.I. Solvent Red 1.

Useful wetting agents which may be present in the seed dressing formulations usable in accordance with the invention are all substances which promote wetting and which are conventionally used for the formulation of active agrochemical ingredients. Usable with preference are alkylnaphthalenesulphonates, such as diisopropyl- or diisobutylnaphthalenesulphonates.

Useful dispersants and/or emulsifiers which may be present in the seed dressing formulations usable in accordance with the invention are all nonionic, anionic and cationic dispersants conventionally used for the formulation of active agrochemical ingredients. Usable with preference are nonionic or anionic dispersants or mixtures of nonionic or anionic dispersants. Useful nonionic dispersants include especially ethylene oxide/propylene oxide block polymers, alkylphenol polyglycol ethers and tristryrylphenol polyglycol ether, and the phosphated or sulphated derivatives thereof. Suitable anionic dispersants are especially lignosulphonates, polyacrylic acid salts and arylsulphonate/formaldehyde condensates.

Antifoams which may be present in the seed dressing formulations usable in accordance with the invention are all foam-inhibiting substances conventionally used for the formulation of active agrochemical ingredients. Silicone antifoams and magnesium stearate can be used with preference.

Preservatives which may be present in the seed dressing formulations usable in accordance with the invention are all substances usable for such purposes in agrochemical compositions. Examples include dichlorophene and benzyl alcohol hemiformal.

Secondary thickeners which may be present in the seed dressing formulations usable in accordance with the invention are all substances usable for such purposes in agrochemical compositions. Preferred examples include cellulose derivatives, acrylic acid derivatives, xanthan, modified clays and finely divided silica.

Adhesives which may be present in the seed dressing formulations usable in accordance with the invention are all customary binders usable in seed dressing products. Preferred examples include polyvinylpyrrolidone, polyvinyl acetate, polyvinyl alcohol and tylose.

The formulations for on-seed applications usable in accordance with the invention can be used to treat a wide variety of different kinds of seed either directly or after prior dilution with water. For instance, the concentrates or the preparations obtainable therefrom by dilution with water can be used to dress the seed of cereals, such as wheat, barley, rye, oats, and triticale, and also seeds of maize, soybean, rice, oilseed rape, peas, beans, cotton, sunflowers, and beets, or else a wide variety of different vegetable seeds. The formulations usable in accordance with the invention, or the dilute preparations thereof, can also be used for seeds of transgenic plants. In this case, additional synergistic effects may also occur in interaction with the substances formed by expression.

For treatment of seeds with the formulations usable in accordance with the invention, or the preparations prepared therefrom by adding water, all mixing units usable customarily for on-seed applications are useful. Specifically,

the procedure in on-seed applications is to place the seeds into a mixer, to add the particular desired amount of the formulations, either as such or after prior dilution with water, and to mix everything until all applied formulations are distributed homogeneously on the seeds. If appropriate, this is followed by a drying operation.

The application rate of the formulations usable in accordance with the invention can be varied within a relatively wide range. It is guided by the particular content of the active ingredients in the formulations and by the seeds. The application rates of each single active ingredient is generally between 0.001 and 15 g per kilogram of seed, preferably between 0.01 and 5 g per kilogram of seed.

*Antimycotic Effects*

In addition, the compound combinations according to the invention and compositions comprising such combination also have very good antimycotic effects. They have a very broad antimycotic activity spectrum, especially against dermatophytes and yeasts, moulds and diphasic fungi (for example against Candida species, such as Candida albicans, Candida glabrata), and Epidermophyton floccosum, Aspergillus species, such as Aspergillus niger and Aspergillus fumigatus, Trichophyton species, such as Trichophyton mentagrophytes, Microsporon species such as Microsporon canis and audouinii. The enumeration of these fungi by no means constitutes a restriction of the mycotic spectrum covered, and is merely of illustrative character.

The compound combinations according to the invention and compositions comprising such combination can be used also to control important fungal pathogens in fish and crustacea farming, e.g. saprolegnia diclina in trouts, saprolegnia parasitica in crayfish.

The compound combinations according to the invention and compositions comprising such combination can therefore be used both in medical and in non-medical applications.

The compound combinations according to the invention and compositions comprising such combination can be used as such, in the form of their formulations or the use forms prepared therefrom, such as ready-to-use solutions, suspensions, wettable powders, pastes, soluble powders, dusts and granules. Application is accomplished in a customary manner, for example by watering, spraying, atomizing, broadcasting, dusting, foaming, spreading-on and the like. It is also possible to deploy the active ingredients by the ultra-low volume method or to inject the active ingredient preparation/the active ingredient itself into the soil. It is also possible to treat the seed of the plants.

*GMO*

As already mentioned above, it is possible to treat all plants and their parts in accordance with the invention. In a preferred embodiment, wild plant species and plant cultivars, or those obtained by conventional biological breeding methods, such as crossing or protoplast fusion, and also parts thereof, are treated. In a further preferred embodiment, transgenic plants and plant cultivars obtained by genetic engineering methods, if appropriate in combination with conventional methods (Genetically Modified Organisms), and parts thereof are treated. The terms "parts" or "parts of plants" or "plant parts" have been explained above. More preferably, plants of the plant cultivars which are commercially available or are in use are treated in accordance with the invention. Plant cultivars are understood to mean plants which have new properties ("traits") and have been obtained by conventional breeding, by mutagenesis or by recombinant DNA techniques. They can be cultivars, varieties, bio- or genotypes.

The method of treatment according to the invention can be used in the treatment of genetically modified organisms (GMOs), e.g. plants or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozone exposure,

high light exposure, limited availability of nitrogen nutrients, limited availability of phosphorus nutrients, shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stresses).

Plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Plants or plant cultivars (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance.

Plants or plant cultivars (obtained by plant biotechnology methods such as genetic engineering) which may also be treated according to the invention show altered quantity, quality and/or storage-stability of the harvested product and/or altered properties of specific ingredients of the harvested product.

Plants or plant cultivars (that can be obtained by plant biotechnology methods such as genetic engineering) which may also be treated according to the invention are plants, such as cotton plants, with altered fiber characteristics. Such plants can be obtained by genetic transformation, or by selection of plants contain a mutation imparting such altered fiber characteristics.

Plants or plant cultivars (that can be obtained by plant biotechnology methods such as genetic engineering) which may also be treated according to the invention are plants, such as oilseed rape or related Brassica plants, with altered oil profile characteristics. Such plants can be obtained by genetic transformation, or by selection of plants contain a mutation imparting such altered oil profile characteristics.

Plants or plant cultivars (that can be obtained by plant biotechnology methods such as genetic engineering) which may also be treated according to the invention are plants, such as oilseed rape or related Brassica plants, with altered seed shattering characteristics. Such plants can be obtained by genetic transformation, or by selection of plants contain a mutation imparting such altered seed shattering characteristics and include plants such as oilseed rape plants with delayed or reduced seed shattering.

Plants or plant cultivars (that can be obtained by plant biotechnology methods such as genetic engineering) which may also be treated according to the invention are plants, such as Tobacco plants, with altered post-translational protein modification patterns.

*Application Rates*

When using the compound combinations according to the invention and compositions comprising such combination as fungicides, the application rates can be varied within a relatively wide range, depending on the kind of application. The application rate is

in the case of treatment of plant parts, for example leaves: from 0.1 to 10 000 g/ha, preferably from 10 to 1000 g/ha, more preferably from 50 to 300 g/ha (in the case of application by watering or dripping, it is even possible to reduce the application rate, especially when inert substrates such as rockwool or perlite are used);

in the case of seed treatment: from 0.1 to 200 g per 100 kg of seed, preferably from 1 to 150 g per 100 kg of seed, more preferably from 2.5 to 25 g per 100 kg of seed, even more preferably from 2.5 to 12.5 g per 100 kg of seed;

in the case of soil treatment: from 0.1 to 10 000 g/ha, preferably from 1 to 5000 g/ha,

wherein the given amounts refer to the total amount of active ingredient in the respective combination or composition.

These application rates are merely by way of example and are not limiting for the purposes of the invention.

The invention is illustrated by the examples below. However, the invention is not limited to the examples.

## Examples

### Preparation examples of compounds of formula (I-1-Q-I-1)

### Preparation of compound of formula (I-34):

Preparation of 1-[2-(1-chlorocyclopropyl)-3-(2-fluorophenyl)-2-hydroxypropyl]-1*H*-imidazole-5-carbonitrile **(I-34)**

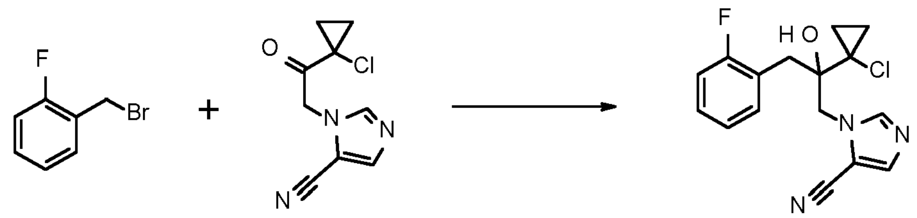

(**I-34**)

At 0-5 °C (ice/NaCl bath) a solution of 2-fluorobenzyl bromide (1.30 g, 6.86 mmol, 1.2 eq) in $Et_2O$ (5 mL) was added dropwise to a suspension of magnesium turnings (417 mg, 17.1 mmol, 3.0 equiv; activated by stirring at rt under Argon in the presence of a catalytic amount of iodine) in $Et_2O$ (15 mL). The mixture was stirred 45min at 5°C.

To this solution at 0-5°C was added a solution of 1-[2-(1-chlorocyclopropyl)-2-oxoethyl]-1H-imidazole-5-carbonitrile (2.00 g, 60% purity, 5.72 mmol, 1.0 eq) in $Et_2O$ (30 mL) dropwise over 5 min. The reaction mixture was further stirred while allowed to warm up to room temperature over 1h. To the resulting solution, cooled down to 5°C, was added sat. aq. $NH_4Cl$. The resulting mixture was diluted with water, then extracted with ethyl acetate (3 x 20 mL). The combined organic layers were washed with sat. aq. $NaHCO_3$, dried ($MgSO_4$), then concentrated to dryness *in vacuo.* The oily residue was purified by chromatography over silica gel, eluted with a mixture of *n*-heptane/ethyl acetate (100:0 to 60:40). After evaporation of the solvent, 218 mg (12%) of 1-[2-(1-chlorocyclopropyl)-3-(2-fluorophenyl)-2-hydroxypropyl]-1H-imidazole-5-carbonitrile (1-34) were obtained as a yellow oil.
MS (ESI): 320.1 ($[M+H]^+$)

The following Table 1 illustrates in a non -limiting manner examples of compounds according to formula (I-1-Q-I-1).

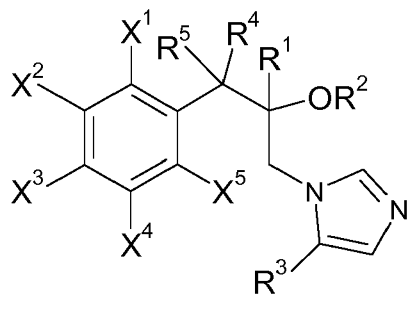

(I-1-Q-I-1)

Table 1

| Ex N° | $X^1$ | $X^2$ | $X^3$ | $X^4$ | $R^1$ | $R^2$ | $R^3$ | $R^4$ | $R^5$ | LogP |
|---|---|---|---|---|---|---|---|---|---|---|
| I-34(*) | F | H | H | H | 1-chlorocyclopropyl | H | cyano | H | H | 2,64[a] |
| I-132(*) | F | H | H | H | 1-chlorocyclopropyl | H | cyano | H | H | 2,59[a] |

(continued)

| Ex N° | X1 | X2 | X3 | X4 | R1 | R2 | R3 | R4 | R5 | LogP |
|---|---|---|---|---|---|---|---|---|---|---|
| I-133(*) | F | H | H | H | 1-chlorocyclopropyl | H | cyano | H | H | 2,59[a] |
| I-145 | F | Cl | H | H | 1-chlorocyclopropyl | H | cyano | H | H | 3,02[a] |

Optical rotation

Concentration c is expressed in g/100 mL

**(*) Ex I-132 and I-133 are the 2 enantiomers of Ex I-34**

Ex I-132: Optical rotation: -16.2 (c=0.99, MeOH; 20°C)

Ex I-133: Optical rotation: +14.2 (c=1.13, MeOH, 20°C)

Measurement of LogP values was performed according to EEC directive 79/831 Annex V.A8 by HPLC (High Performance Liquid Chromatography) on reversed phase columns with the following methods:

[a] LogP value is determined by measurement of LC-UV, in an acidic range, with 0.1% formic acid in water and acetonitrile as eluent (linear gradient from 10% acetonitrile to 95% acetonitrile).

[b] LogP value is determined by measurement of LC-UV, in a neutral range, with 0.001 molar ammonium acetate solution in water and acetonitrile as eluent (linear gradient from 10% acetonitrile to 95% acetonitrile).

[c] LogP value is determined by measurement of LC-UV, in an acidic range, with 0.1% phosphoric acid and acetonitrile as eluent (linear gradient from 10% acetonitrile to 95% acetonitrile).

If more than one LogP value is available within the same method, all the values are given and separated by "+".

Calibration was done with straight-chain alkan2-ones (with 3 to 16 carbon atoms) with known LogP values (measurement of LogP values using retention times with linear interpolation between successive alkanones). Lambda-max-values were determined using UV-spectra from 200 nm to 400 nm and the peak values of the chromatographic signals.

**NMR-Peak lists**

1H-NMR data of selected examples are written in form of 1H-NMR-peak lists. To each signal peak are listed the δ-value in ppm and the signal intensity in round brackets. Between the δ-value - signal intensity pairs are semicolons as delimiters.

The peak list of an example has therefore the form:

$\delta_1$ (intensity$_1$); $\delta_2$ (intensity$_2$);........; $\delta_i$ (intensity$_i$);......; $\delta_n$ (intensity$_n$)

Intensity of sharp signals correlates with the height of the signals in a printed example of a NMR spectrum in cm and shows the real relations of signal intensities. From broad signals several peaks or the middle of the signal and their relative intensity in comparison to the most intensive signal in the spectrum can be shown.

For calibrating chemical shift for 1H spectra, we use tetramethylsilane and/or the chemical shift of the solvent used, especially in the case of spectra measured in DMSO. Therefore in NMR peak lists, tetramethylsilane peak can occur but not necessarily.

The 1H-NMR peak lists are similar to classical 1H-NMR prints and contains therefore usually all peaks, which are listed at classical NMR-interpretation.

Additionally they can show like classical 1H-NMR prints signals of solvents, stereoisomers of the target compounds, which are also object of the invention, and/or peaks of impurities.

To show compound signals in the delta-range of solvents and/or water the usual peaks of solvents, for example peaks of DMSO in DMSO-$D_6$ and the peak of water are shown in our 1H-NMR peak lists and have usually on average a high intensity.

The peaks of stereoisomers of the target compounds and/or peaks of impurities have usually on average a lower intensity than the peaks of target compounds (for example with a purity >90%).

Such stereoisomers and/or impurities can be typical for the specific preparation process. Therefore their peaks can help to recognize the reproduction of our preparation process via "side-products-fingerprints".

An expert, who calculates the peaks of the target compounds with known methods (MestreC, ACD-simulation, but also with empirically evaluated expectation values) can isolate the peaks of the target compounds as needed optionally using additional intensity filters. This isolation would be similar to relevant peak picking at classical 1H-NMR interpretation.

Further details of NMR-data description with peak lists you find in the publication "Citation of NMR Peaklist Data within Patent Applications" of the Research Disclosure Database Number 564025.

| |
|---|
| Example 1-34: $^{1}$H-NMR (499.9 MHz, d$_6$-DMSO):<br>δ= 7.951 (16.0); 7.815 (15.2); 7.552 (2.6); 7.539 (4.8); 7.536 (5.1); 7.523 (2.7); 7.521 (2.7); 7.339 (1.2); 7.336 (1.3); 7.324 (3.1); 7.313 (3.0); 7.309 (3.5); 7.298 (1.9); 7.295 (1.7); 7.188 (3.8); 7.173 (7.7); 7.159 (7.5); 7.153 (3.7); 7.145 (3.5); 7.110 (0.3); 5.430 (15.9); 4.585 (6.5); 4.555 (7.2); 4.069 (8.0); 4.040 (7.3); 3.320 (5.6); 3.222 (4.9); 3.194 (7.2); 3.085 (6.7); 3.057 (4.5); 2.507 (2.9); 2.503 (4.0); 2.500 (3.1); 2.074 (3.3); 0.885 (0.5); 0.818 (1.6); 0.804 (2.8); 0.796 (2.6); 0.791 (2.7); 0.782 (3.1); 0.770 (2.3); 0.631 (1.6); 0.617 (2.7); 0.610 (2.9); 0.605 (2.3); 0.596 (3.4); 0.584 (2.4); 0.501 (2.2); 0.490 (3.1); 0.487 (2.9); 0.480 (2.2); 0.475 (3.1); 0.469 (2.6); 0.466 (2.1); 0.454 (1.9); 0.426 (2.4); 0.415 (2.5); 0.412 (2.9); 0.405 (3.0); 0.401 (2.5); 0.394 (2.4); 0.390 (2.6); 0.379 (1.5); 0.000 (1.8) |
| Example I-132: $^{1}$H-NMR (499.9 MHz, $CDCl_3$):<br>δ= 7.857 (10.6); 7.638 (10.7); 7.404 (1.8); 7.401 (2.0); 7.389 (3.8); 7.385 (4.2); 7.373 (2.2); 7.370 (2.4); 7.356 (1.2); 7.352 (1.1); 7.345 (1.3); 7.341 (2.7); 7.337 (2.1); 7.329 (2.3); 7.325 (2.9); 7.321 (1.6); 7.313 (1.6); 7.310 (1.4); 7.262 (9.3); 7.196 (3.1); 7.195 (3.2); 7.181 (5.2); 7.180 (5.2); 7.166 (2.4); 7.165 (2.4); 7.136 (2.8); 7.116 (3.4); 7.098 (2.5); 5.297 (16.0); 4.697 (6.9); 4.668 (7.8); 4.183 (7.4); 4.154 (6.8); 3.317 (2.8); 3.289 (6.0); 3.242 (6.3); 3.213 (3.0); 2.340 (6.6); 2.324 (6.7); 1.637 (4.8); 1.255 (0.3); 1.241 (0.3); 0.719 (1.3); 0.710 (1.5); 0.706 (1.5); 0.699 (2.7); 0.690 (2.9); 0.685 (3.2); 0.676 (3.7); 0.664 (3.2); 0.655 (3.4); 0.653 (3.7); 0.643 (3.8); 0.636 (1.0); 0.632 (2.0); 0.623 (2.9); 0.616 (0.5); 0.604 (2.9); 0.595 (2.1); 0.591 (1.2); 0.583 (3.9); 0.573 (3.6); 0.571 (3.3); 0.562 (2.8); 0.550 (0.4); 0.532 (3.3); 0.523 (3.0); 0.518 (2.9); 0.510 (3.2); 0.502 (2.0); 0.498 (1.9); 0.489 (1.6); 0.006 (0.3); 0.000 (9.1); -0.007 (0.5) |
| Example I-133: $^{1}$H-NMR (499.9 MHz, $CDCl_3$):<br>δ= 7.858 (11.5); 7.639 (11.6); 7.403 (1.9); 7.400 (2.2); 7.388 (4.0); 7.385 (4.5); 7.373 (2.3); 7.370 (2.5); 7.356 (1.1); 7.353 (1.1); 7.345 (1.3); 7.341 (2.8); 7.338 (2.2); 7.329 (2.3); 7.325 (3.1); 7.321 (1.7); 7.314 (1.6); 7.310 (1.4); 7.262 (10.6); 7.197 (3.2); 7.195 (3.5); 7.182 (5.4); 7.180 (5.7); 7.167 (2.4); 7.165 (2.5); 7.136 (2.9); 7.116 (3.6); 7.099 (2.5); 5.297 (16.0); 4.697 (7.4); 4.668 (8.3); 4.183 (7.9); 4.154 (7.1); 3.317 (3.0); 3.289 (6.5); 3.242 (6.8); 3.213 (3.1); 2.330 (7.0); 2.314 (7.1); 1.626 (5.0); 1.255 (0.4); 1.241 (0.4); 0.719 (1.3); 0.710 (1.5); 0.706 (1.6); 0.699 (2.9); 0.690 (3.1); 0.685 (3.4); 0.676 (3.9); 0.665 (3.4); 0.656 (3.6); 0.653 (3.9); 0.644 (3.8); 0.636 (1.0); 0.632 (1.9); 0.623 (2.8); 0.615 (0.4); 0.604 (2.8); 0.594 (2.1); 0.591 (1.2); 0.583 (4.0); 0.573 (3.6); 0.571 (3.5); 0.562 (2.8); 0.532 (3.3); 0.524 (3.1); 0.518 (3.0); 0.511 (3.4); 0.502 (1.9); 0.498 (1.9); 0.489 (1.5); 0.006 (0.4); 0.000 (10.3); -0.007 (0.7) |
| Example 1-145: $^{1}$H-NMR (300.2 MHz, $CDCl_3$):<br>δ= 7.897 (8.2); 7.683 (8.5); 7.453 (1.4); 7.448 (1.5); 7.426 (2.6); 7.423 (2.7); 7.402 (1.7); 7.397 (1.9); 7.376 (1.4); 7.371 (1.4); 7.350 (3.0); 7.329 (2.0); 7.323 (1.6); 7.300 (7.0); 7.180 (2.7); 7.177 (2.4); 7.154 (4.0); 7.128 (1.7); 7.125 (1.5); 4.753 (4.7); 4.704 (5.6); 4.241 (5.5); 4.192 (4.7); 4.165 (0.7); 4.141 (0.7); 3.406 (1.7); 3.401 (1.7); 3.359 (3.7); 3.354 (3.7); 3.280 (3.8); 3.275 (3.8); 3.232 (1.8); 3.227 (1.8); 2.353 (2.4); 2.333 (2.8); 2.078 (3.2); 2.043 (16.0); 1.739 (0.7); 1.316 (0.9); 1.292 (1.7); 1.269 (0.8); 0.782 (0.7); 0.773 (0.8); 0.765 (1.0); 0.762 (0.8); 0.747 (2.0); 0.731 (2.3); 0.721 (2.7); 0.711 (2.8); 0.702 (2.6); 0.698 (2.6); 0.689 (1.4); 0.675 (1.2); 0.663 (1.1); 0.654 (2.1); 0.648 (0.5); 0.638 (2.3); 0.628 (1.2); 0.609 (2.2); 0.601 (0.6); 0.593 (2.8); 0.589 (2.6); 0.580 (2.5); 0.563 (2.6); 0.554 (2.3); 0.541 (1.9); 0.530 (1.5); 0.519 (0.9); 0.511 (0.9); 0.502 (0.8); 0.033 (6.5) |

## Biological examples

The active compound combinations according to the invention have an improved non-target species compatibility, thus potentially providing more environmental friendly solutions. This is evident from the example below. While the individual active compounds exhibit weaknesses with regard to their compatibility to non-target species, the combinations have the potential for reducing undesirable effects against these non-target species. Thereby, the invention will

bring agronomic benefit through the possibility of e.g. using higher application rates while preserving environmental quality or reducing the mitigation measures that are needed to ensure the safe use of the product towards the environment.

A more environmentally friendly fungicidal product occurs when the effect of the active compound combination is lower than expected under the hypothesis of concentration addition, which hypothesis is classically used for the regulatory environmental risk assessment of plant protection products. Under the hypothesis of concentration addition for a mixture of the several active compounds, the sum of the concentration of chemicals ($c_i$) multiplied with their respective potency in a mixture provoking x% effect ($1/EC_{xi}$) is equal to 1 (cf. Cedergreen, N., "Quantifying Synergy: A Systematic Review of Mixture Toxicity Studies within Environmental Toxicology", PLOSone 2014, 9(5), e96580):

$$\sum_{i=1}^{n} \frac{c_i}{EC_{xi}} = 1 \qquad [1]$$

with $EC_{xi}$ the Effect Concentration ($EC$) of each chemical $i$ (in ppm) causing x% effect on the ecotoxicity test endpoint.

Under this hypothesis, the expected effect of the combination of active compounds can be calculated as follows:

$$EC_{x\,mix} = \left(\sum_{i=1}^{n} \frac{p_i}{EC_{xi}}\right)^{-1} \qquad [2]$$

With $p_i$ being the proportion of each active compound $i$ in the combination.

For each compound combination, the predicted $ECx$ value is calculated. It is then compared to an experimentally measured value. The ratio of predicted versus measured effect for the combination (thereafter called the Model Deviation Ratio or MDR) is then calculated. Results are interpreted as follows:

- if MDR < 1, the compound combination is less effective, i.e. more environmentally favourable than expected (i.e. compounds A and B have less than additive effects);

- if MDR > 1, the compound combination is more effective, i.e. less environmentally favourable than expected (i.e. compounds A and B have more than additive effects).

The environmental effect of the compound combinations was measured experimentally in laboratory ecotoxicity screening studies with fish (*Danio rerio*). Fish embryos were exposed at 28.5 °C for 96 hours to the active compounds alone and in combinations according to the invention. Mortality was recorded after 48h and 96h for each tested concentration and a reference control. These data were then used in order to calculate the concentration causing the mortality of 50% of exposed fish i.e. lethal concentration 50%, $LC_{50}$. The $LC_{50}$ values (in ppm (= mg/l) a.i.) obtained for the active compounds alone were used to estimate the predicted toxicity of the compound combination, using Equation 2. Then, the MDR values were calculated.

The invention is illustrated by the following examples. However the invention is not limited to the examples.

**Example A: *in vivo* ecotoxicity screening test on fish (*Danio rerio*)**

Solvent: 0.5% by weight Dimethylsulfoxid

To produce a suitable preparation of active compound, the compound is first diluted in a pure solution of the vehicle solvent dimethylsulfoxid. This concentrate is then diluted with water to the desired a.i. concentration, leading to a maximal solvent concentration of 0.5%. by weight The compounds alone and the combinations were tested for five increasing concentrations comprised between 0.01 and 1000 ppm (mg/l) a.i., (e.g. 0.1, 1.0, 10 and 100 ppm a.i). For the combinations, compounds A and B were mixed in a weight ratio of 5:1 to 1:5 and five increasing concentrations were tested for each ratio.

The table below clearly shows that the observed adverse effect of active compound combinations according to the invention is lower than the predicted effect, i.e. the combinations according to the invention have the potential for lowering undesirable environmental effects on non-target species.

**Table A1: *in vivo* ecotoxicity screening test on fish (*D. rerio*): results after 48h**

| Active compounds | | Tested concentration range in ppm a.i. | Ecotoxicity $LC_{50-48h}$ (ppm a.i.) found* | calc.** | MDR |
|---|---|---|---|---|---|
| (I-34) 1-[2-(1-chlorocyclopropyl)-3-(2-fluorophenyl)-2-hydroxypropyl]-1*H*-imidazole-5-carbonitrile | | 0.01 - 35 | 35.63 | | |
| (I-145) 1-[2-(1-chlorocyclopropyl)-3-(3-chloro-2-fluorophenyl)-2-hydroxypropyl]-1H-imidazole-5-carbonitrile | | 0.01 - 40 | 28.24 | | |
| 1.012 ipconazole | | 0.01 - 40 | 13.84 | | |
| 1.015 paclobutrazole | | 0.01 - 200 | 99.84 | | |
| 1.018 prothioconazole | | 0.01 - 100 | 9.49 | | |
| 1.020 spiroxamine | | 0.01 - 40 | 16.46 | | |
| 1.021 tebuconazole | | 0.01 - 100 | 19.7 | | |
| (I-34) + 1.012 | 1:5 | 0.2+1 - 3.2+16 | 13.56 | 15.04 | 1.11 |
| (I-34) + 1.012 | 5:1 | 2+0.4 - 32+6.4 | 24.50 | 27.97 | 1.14 |
| (I-34) + 1.018 | 1:5 | 0.2+1 - 3.2+16 | 29.20 | 10.81 | 0.37 |
| (I-34) + 1.018 | 5:1 | 2+0.4 - 32+6.4 | 29.50 | 24.42 | 0.83 |
| (I-34) + 1.020 | 1:5 | 2+10 - 32+160 | 62.82 | 18.08 | 0.29 |
| (I-34) + 1.020 | 5:1 | 10+2 - 70+14 | 42.25 | 29.84 | 0.71 |
| (I-34) + 1.021 | 1:5 | 0.2+1 - 24+120 | 19.26 | 21.29 | 1.11 |
| (I-34) + 1.021 | 5:1 | 10+2 - 70+14 | 37.91 | 31.40 | 0.83 |
| (I-145) + 1.018 | 1:5 | 0.2+1 - 3.2+16 | 19.20 | 10.67 | 0.56 |
| (I-145) + 1.018 | 5:1 | 2+0.4 - 32+6.4 | 19.27 | 21.24 | 0.90 |
| (I-145) + 1.020 | 1:5 | 2+10 - 32+160 | 57.02 | 17.69 | 0.31 |
| (I-145) + 1.020 | 5:1 | 2+0.4 - 32+6.4 | 22.81 | 25.23 | 1.10 |
| (I-145) + 1.021 | 1:5 | 0.2+1 - 24+120 | 30.18 | 20.74 | 0.69 |
| (I-145) + 1.021 | 5:1 | 2+0.4 - 32+6.4 | 19.97 | 26.34 | 1.32 |
| * found = experimentally measured value<br>** calc. = predicted value | | | | | |

**Table A2: *in vivo* ecotoxicity screening test on fish (*D. rerio*): results after 96h**

| Active compounds | Tested concentration range in ppm a.i. | Ecotoxicity $LC_{50-96h}$ (ppm a.i.) found* | calc.** | MDR |
|---|---|---|---|---|
| (I-34) 1-[2-(1-chlorocyclopropyl)-3-(2-fluorophenyl)-2-hydroxypropyl]-1*H*-imidazole-5-carbonitrile | 0.01 - 35 | 27.43 | | |
| (I-145) 1-[2-(1-chlorocyclopropyl)-3-(3-chloro-2-fluorophenyl)-2-hydroxypropyl]-1H-imidazole-5-carbonitrile | 0.01 - 40 | 13.43 | | |
| 1.012 ipconazole | 0.01 - 40 | 6.57 | | |
| 1.015 paclobutrazole | 0.01 - 200 | 56.52 | | |

(continued)

| Active compounds | | Tested concentration range in ppm a.i. | Ecotoxicity $LC_{50-96h}$ (ppm a.i.) found* | calc.** | MDR |
|---|---|---|---|---|---|
| 1.018 prothioconazole | | 0.01 - 100 | 3.16 | | |
| 1.020 spiroxamine | | 0.01 - 40 | 14.81 | | |
| 1.021 tebuconazole | | 0.01 - 100 | 19.7 | | |
| (I-34) + 1.012 | 1:5 | 0.2+1 - 3.2+16 | 9.42 | 7.52 | 0.80 |
| (I-34) + 1.012 | 5:1 | 2+0.4 - 32+6.4 | 19.42 | 17.94 | 0.92 |
| (I-34) + 1.018 | 1:5 | 0.2+1 - 3.2+16 | 9.96 | 3.71 | 0.37 |
| (I-34) + 1.018 | 5:1 | 2+0.4 - 32+6.4 | 19.27 | 12.03 | 0.62 |
| (I-34) + 1.020 | 1:5 | 2+10 - 32+160 | 49.92 | 16.04 | 0.32 |
| (I-34) + 1.020 | 5:1 | 10+2 - 70+14 | 25.34 | 24.02 | 0.95 |
| (I-34) + 1.021 | 1:5 | 0.2+1 - 24+120 | 18.66 | 20.67 | 1.11 |
| (I-34) + 1.021 | 5:1 | 10+2 - 70+14 | 36.67 | 25.75 | 0.70 |
| (I-145) + 1.018 | 1:5 | 0.2+1 - 3.2+16 | 10.38 | 3.62 | 0.35 |
| (I-145) + 1.018 | 5:1 | 2+0.4 - 32+6.4 | 14.75 | 8.71 | 0.59 |
| (I-145) + 1.020 | 1:5 | 2+10 - 32+160 | 57.00 | 14.56 | 0.26 |
| (I-145) + 1.020 | 5:1 | 2+0.4 - 32+6.4 | 19.58 | 13.64 | 0.70 |
| (I-145) + 1.021 | 1:5 | 0.2+1 - 24+120 | 30.18 | 18.28 | 0.61 |
| (I-145) + 1.021 | 5:1 | 2+0.4 - 32+6.4 | 18.83 | 14.18 | 0.75 |
| * found = experimentally measured value<br>** calc. = predicted value | | | | | |

## Claims

**1.** Active compound combination comprising

(A) at least one imidazole derivative of formula (I-1-Q-I-1)

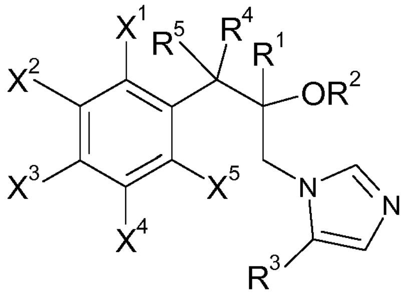

(I-1-Q-I-1).

wherein

$R^1$ represents 1-chlorocyclopropyl, 1-fluorocyclopropyl, 1-methylcyclopropyl or cyclopropylmethyl;
$R^2$ represents H;
$R^3$ represents chlorine or cyano;
$R^4$ represents hydrogen, fluorine, methyl;

$R^5$ represents hydrogen, fluorine, methyl; and
$X^1$, $X^2$, $X^3$, $X^4$ or $X^5$ independently from each other represent hydrogen, methyl, $CF_3$ or halogen;

or its salts or N-oxides,
and
(B) at least one further active compound selected from inhibitors of the ergosterol synthesis.

**2.** Active compound combination according to claim 1, wherein the imidazole derivative of formula (I-1-Q-I-1) is an imidazole derivative of formula (I-1-Q-I-1), wherein

$R^1$ represents 1-chlorocyclopropyl;
$R^3$ represents cyano;
$R^4$ represents hydrogen;
$R^5$ represents hydrogen; and
$X^1$, $X^2$, $X^3$, $X^4$ or $X^5$ independently from each other represent hydrogen, fluorine or chlorine;

or its salt or N-oxide.

**3.** Active compound combination according to claim 1 or 2, wherein the imidazole derivative of formula (I-1-Q-I-1) is an imidazole derivative of formula (I-1-Q-I-1), wherein at least 3 of $X^1$, $X^2$, $X^3$, $X^4$ and $X^5$ represent hydrogen and the remaining of $X^1$, $X^2$, $X^3$, $X^4$ and $X^5$ represent fluorine or chlorine;
or its salts or N-oxides.

**4.** Active compound combination according to at least one of claims 1 to 3, wherein the imidazole derivative of formula (I-I-Q-1-1) is selected from the group consisting of compound (I-34) 1-[2-(1-chlorocyclopropyl)-3-(2-fluorophenyl)-2-hydroxypropyl]-1*H*-imidazole-5-carbonitrile, and compound (I-145) 1-[3-(3-chloro-2-fluorophenyl)-2-(1-chlorocyclopropyl)-2-hydroxypropyl]-1H-imidazole-5-carbonitrile.

**5.** Active compound combination according to at least one of claims 1 to 4, wherein the further active compound is selected from the group consisting of (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) Pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,5R)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2- [4-(4-chlorophenoxy)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chlorocyclopropyl)-4-[(1S)-2,2-dichlorocyclopropyl]-1-(1H-1,2,4-triazol-1-yl)butan-2-ol, (1.033) (2S)-2-[4-(4-chlorophenoxy)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{[rel(2R,3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoxy)phenyl]-1-(1H-1,2,4-triazol-1-yl)propan-2-ol, (1.052) 2-[2-chloro-4-(4-chlorophenoxy)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) 2-[4-(4-chlorophenoxy)-2-(trifluoromethyl)phenyl]-1-(1H-1,2,4-triazol-1-yl)propan-2-ol, (1.056) 2-{[3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.058) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-{[3-(2,2,2-trifluoroethoxy)phenyl]sulfanyl}phenyl)-N-ethyl-N-methylimidoformamide, (1.065) N'-(2,5-dimethyl-4-[3-(2,2,3,3-tetrafluoropropoxy)phenyl]sulfanyl}phenyl)-N-ethyl-N-methylimidoformamide, (1.066) N'-(2,5-dimethyl-4-{[3-(pentafluoroethoxy)phenyl]sulfanyl}phenyl)-N-ethyl-N-methylimidoformamide, (1.067) N'-(2,5-dimethyl-4-{3-[(1,1,2,2-tetrafluoroethyl)sulfanyl]phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]phenoxy}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{[3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoxy}-2,5-dimethylphenyl)-N-ethyl-N-methylimidoformamide, (1.074) N'-[5-bromo-6-(2,3-dihydro-1H-inden-2-yloxy)-2-methylpyridin-3-yl]-N-ethyl-N-methylimidoformamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(1R)-1-(3,5-difluorophenyl)ethoxy]-2-methylpyridin-3-yl}-N-ethyl-N-methylimidoformamide, (1.077) N'-{5-bromo-6-[1S)-1-(3,5-difluorophenyl)ethoxy]-2-methylpyridin-3-yl}-N-ethyl-N-methylimidoformamide, (1.078) N'-{5-bromo-6-[(cis-4-isopropylcyclohexyl)oxy]-2-methylpyridin-3-yl{-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoxy]-2-methylpyridin-3-yl}-N-ethyl-N-methylimidoformamide, (1.081) Mefentrifluconazole, and (1.082) Ipfentrifluconazole.

6. Active compound combination according to at least one of claims 1 to 5, wherein the further active compound is selected from the group consisting of (1.012) ipconazole, (1.018) prothioconazole, (1.020) spiroxamine, and (1.021) tebuconazole.

7. Active compound combination according to at least one of claims 1 to 6, wherein the further active compound is selected from the group consisting of (1.018) prothioconazole, and (1.020) spiroxamine.

8. Active compound combination comprising (A) at least one imidazole derivative selected from the group consisting of compound (I-34) 1-[2-(1-chlorocyclopropyl)-3-(2-fluorophenyl)-2-hydroxypropyl]-1*H*-imidazole-5-carbonitrile, and compound (I-145) 1-[3-(3-chloro-2-fluorophenyl)-2-(1-chlorocyclopropyl)-2-hydroxypropyl]-1H-imidazole-5-carbonitrile
and
at least one further active compound (B) selected from (1.012) ipconazole, (1.018) prothioconazole, (1.020) spiroxamine, and (1.021) tebuconazole.

9. Composition for controlling harmful microorganisms, preferably phytopathogenic harmful fungi, in crop protection and in the protection of materials, **characterized by** a content of an active compound combination according to at least one of claims 1 to 8, in addition to at least one extender and/or surfactant.

10. Method for controlling harmful microorganisms, preferably phytopathogenic harmful fungi, in crop protection and in the protection of materials, **characterized in that** an active compound combination according to at least one of claims 1 to 8 or a composition according to claim 9 is applied to the harmful microorganisms and/or their habitat.

11. Method for controlling phytopathogenic harmful fungi in crop protection, **characterized in that** an active compound combination according to at least one of claims 1 to 8 or a composition according to claim 9 is applied to a seed, a plant, a fruit of a plant or to the soil on which the plant grows or is supposed to grow.

**12.** Use of an active compound combination according to at least one of claims 1 to 8 or a composition according to claim 9 for control of harmful microorganisms, preferably phytopathogenic harmful fungi, in crop protection and in the protection of materials.

**13.** Use of an active compound combination according to at least one of claims 1 to 8 or a composition according to claim 9 for treatment of a transgenic plant or of seed.

**14.** Use of at least one imidazole derivative selected from the group consisting of compound (I-34) 1-[2-(1-chlorocyclopropyl)-3-(2-fluorophenyl)-2-hydroxypropyl]-1*H*-imidazole-5-carbonitrile, and compound (I-145) 1-[3-(3-chloro-2-fluorophenyl)-2-(1-chlorocyclopropyl)-2-hydroxypropyl]-1H-imidazole-5-carbonitrile for improving fish compability of a fungicidal composition comprising at least one fungicide selected from (1.012) ipconazole, (1.018) prothioconazole, (1.020) spiroxamine, and (1.021) tebuconazole.

**15.** Seed coated with an active compound combination according to at least one of claims 1 to 8 or a composition according to claim 9.

Europäisches Patentamt
European Patent Office
Office européen des brevets

# EUROPEAN SEARCH REPORT

Application Number
EP 17 18 8974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/118170 A1 (SYNGENTA PARTICIPATIONS AG [CH]) 7 August 2014 (2014-08-07) * the whole document * ----- | 1-15 | INV. A01N43/50 |
| X,D | US 4 085 209 A (MILLER GEORGE ALLEN ET AL) 18 April 1978 (1978-04-18) * the whole document * ----- | 1-15 | |

TECHNICAL FIELDS SEARCHED (IPC)
A01N

The present search report has been drawn up for all claims

1

| Place of search | Date of completion of the search | Examiner |
|---|---|---|
| Munich | 13 December 2017 | Bertrand, Franck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 18 8974

This annex lists the patent family members relating to the patent documents cited in the above-mentioned European search report. The members are as contained in the European Patent Office EDP file on
The European Patent Office is in no way liable for these particulars which are merely given for the purpose of information.

13-12-2017

| Patent document cited in search report | Publication date | Patent family member(s) | Publication date |
|---|---|---|---|
| WO 2014118170 A1 | 07-08-2014 | AR 095137 A1 | 30-09-2015 |
| | | CN 105102443 A | 25-11-2015 |
| | | EP 2951167 A1 | 09-12-2015 |
| | | ES 2621386 T3 | 03-07-2017 |
| | | JP 2016508492 A | 22-03-2016 |
| | | TW 201441215 A | 01-11-2014 |
| | | US 2015351402 A1 | 10-12-2015 |
| | | UY 35295 A | 29-08-2014 |
| | | WO 2014118170 A1 | 07-08-2014 |
| US 4085209 A | 18-04-1978 | AU 497720 B2 | 04-01-1979 |
| | | BE 837997 A | 28-07-1976 |
| | | BR 7600684 A | 31-08-1976 |
| | | CA 1071214 A | 05-02-1980 |
| | | DE 2604487 A1 | 19-08-1976 |
| | | ES 444920 A1 | 01-08-1977 |
| | | FR 2299807 A1 | 03-09-1976 |
| | | GB 1533748 A | 29-11-1978 |
| | | IT 1055123 B | 21-12-1981 |
| | | JP S51105064 A | 17-09-1976 |
| | | NL 7601210 A | 09-08-1976 |
| | | US 4085209 A | 18-04-1978 |
| | | ZA 7600636 B | 28-09-1977 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013076228 A
- US 4085209 A
- WO 2014076228 A
- WO 2014118170 A
- WO 2016156290 A
- EP 461502 A
- DE 4027608 A
- DE 3235935 A


### Non-patent literature cited in the description


- Pesticide Manual
- Database. 564025
- **CEDERGREEN, N.** Quantifying Synergy: A Systematic Review of Mixture Toxicity Studies within Environmental Toxicology. *PLOSone,* 2014, vol. 9 (5), e96580